(19) Europäisches Patentamt
European Patent Office
Office européen des brevets

(11) **EP 4 723 541 A1**

(12) **EUROPEAN PATENT APPLICATION**
published in accordance with Art. 153(4) EPC

(43) Date of publication:
**08.04.2026 Bulletin 2026/15**

(21) Application number: **23938747.5**

(22) Date of filing: **26.05.2023**

(51) International Patent Classification (IPC):
*H04L 9/08* *(2006.01)*

(52) Cooperative Patent Classification (CPC):
**H04L 9/08**

(86) International application number:
**PCT/CN2023/096686**

(87) International publication number:
**WO 2024/243748 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
 • **GAN, Lu**
  **Dongguan, Guangdong 523860 (CN)**

 • **LI, Meng**
  **Dongguan, Guangdong 523860 (CN)**
 • **WANG, Huiming**
  **Dongguan, Guangdong 523860 (CN)**
 • **ZHAO, Feifei**
  **Dongguan, Guangdong 523860 (CN)**
 • **XIONG, Lihui**
  **Dongguan, Guangdong 523860 (CN)**
 • **SHI, Cong**
  **Dongguan, Guangdong 523860 (CN)**

(74) Representative: **Mewburn Ellis LLP**
**Aurora Building**
**Counterslip**
**Bristol BS1 6BX (GB)**

(54) **KEY GENERATION METHOD AND DEVICE**

(57)    The present disclosure provides a key generation method, a device, a computer-readable storage medium, a computer program product, and a computer program. The method includes: sending, by a first device, multiple signals to each of multiple second devices, where radio frequency (RF) coefficients for the multiple signals are calculated based on a respective channel feature between each of the multiple second devices and the first device; and generating, by the first device, a first group key based on related information of the multiple signals, where the first group key is used by the first device to communicate with the multiple second devices.

FIRST DEVICE SENDS MULTIPLE SIGNALS TO EACH OF MULTIPLE SECOND DEVICES, WHERE RADIO FREQUENCY (RF) COEFFICIENTS FOR MULTIPLE SIGNALS ARE CALCULATED BASED ON RESPECTIVE CHANNEL FEATURE BETWEEN EACH SECOND DEVICE AND FIRST DEVICE ⟩ S210

FIRST DEVICE GENERATES FIRST GROUP KEY BASED ON RELATED INFORMATION OF MULTIPLE SIGNALS, WHERE FIRST GROUP KEY IS USED BY FIRST DEVICE TO COMMUNICATE WITH MULTIPLE SECOND DEVICES ⟩ S220

**FIG. 2**

EP 4 723 541 A1

**Description**

TECHNICAL FIELD

This disclosure relates to the field of communication, in particular to a key generation method, a device, a computer-readable storage medium, a computer program product, and a computer program.

BACKGROUND

With the development of communication technology, a non-contact automatic identification technology has emerged. Generally, with such a technology, non-contact data transmission can be performed between a zero-power device and other device (e.g., a reader) in a wireless radio frequency (RF) manner. Since a communication channel between the zero-power device and the reader is an unsecure channel, in order to ensure the security of data transmission for the zero-power device, a scheme for encrypting, with a key, data or information transmitted between the zero-power device and the reader is further proposed. By means of the above scheme, a single zero-power device and a reader can use the same pairwise key (also referred to as a unicast key or a shared key), thereby ensuring the security of data transmission for a single zero-power device. However, in scenarios where multiple zero-power devices exist, how to enable each zero-power device to generate a group key in a manner with relatively low complexity while ensuring the security of the group key becomes a problem to be solved.

SUMMARY

Embodiments of the present disclosure provide a key generation method, a device, a computer-readable storage medium, a computer program product, and a computer program.

Embodiments of the present disclosure provide a key generation method, including: sending, by a first device, multiple signals to each of multiple second devices, where radio frequency (RF) coefficients for the multiple signals are calculated based on a respective channel feature between each of the multiple second devices and the first device; and generating, by the first device, a first group key based on related information of the multiple signals, where the first group key is used by the first device to communicate with the multiple second devices.

Embodiments of the present disclosure provide a key generation method, including: receiving, by a target second device, multiple signals from a first device, where RF coefficients for the multiple signals are calculated based on a channel feature between the target second device and the first device; and generating, by the target second device, a second group key based on related information of the multiple signals, where the second group key is used by the target second device to communicate with the first device, the second group key is identical for multiple second devices, and the target second device is one of the multiple second devices.

Embodiments of the present disclosure provide a first device, including: a first communication unit configured to send multiple signals to each of multiple second devices, where RF coefficients for the multiple signals are calculated based on a respective channel feature between each of the multiple second devices and the first device; and a first processing unit configured to generate a first group key based on related information of the multiple signals, where the first group key is used by the first device to communication with the multiple second devices.

Embodiments of the present disclosure provide a target second device, including: a second communication unit configured to receive multiple signals from a first device, where RF coefficients for the multiple signals are calculated based on a channel feature between the target second device and the first device; and a second processing unit configured to generate a second group key based on related information of the multiple signals, where the second group key is used by the target second device to communicate with the first device, the second group key is identical for multiple second devices, and the target second device is one of the multiple second devices.

Embodiments of the present disclosure provide a first device, including: a processor and a memory in communication with the processor, where the memory is configured to store instructions which, when executed by the processor, cause the first device to: send multiple signals to each of multiple second devices, where RF coefficients for the multiple signals are calculated based on a respective channel feature between each of the multiple second devices and the first device; and generating a first group key based on related information of the multiple signals, where the first group key is used by the first device to communicate with the multiple second devices.

Embodiments of the present disclosure further provide a target second device, including: a processor and a memory in communication with the processor, where the memory is configured to store instructions which, when executed by the processor, cause the target second device to: receive multiple signals from a first device, where RF coefficients for the multiple signals are calculated based on a channel feature between the target second device and the first device; and generate a second group key based on related information of the multiple signals, where the second group key is used by the target second device to communicate with the first device, the second group key is identical for multiple second devices, and the target second device is one of the multiple second devices.

Embodiments of the present disclosure further provide a chip configured to implement the above method. Specifically, the chip includes a processor configured to call and run a computer program from a memory, such that a device equipped with the chip executes the above method.

Embodiments of the present disclosure provide a computer-readable storage medium configured to store a computer program which, when executed by a device, causes the device to perform the above method.

Embodiments of the present disclosure provide a computer program product including computer program instructions, where the computer program instructions cause a computer to perform the above method.

Embodiments of the present disclosure provide a computer program which, when executed on a computer, causes the computer to perform the above method.

By adopting the solution provided in the embodiments of the present disclosure, the first device sends the multiple signals to each second device, where the RF coefficients for the multiple signals are calculated based on the respective channel feature between each second device and the first device. The first device generates, based on the related information of the signals, the group key for communication with the multiple second devices. In this manner, by configuring RF coefficients corresponding to different second devices for the signals sent to different second devices, the respective channel feature between each second device and the first device can be accurately cancelled out, that is, the loss or interference in a channel between each second device and the first device can be cancelled out. Moreover, the group key can be generated merely based on the related information of the signals, thereby reducing the complexity of generating the group key while ensuring the security of the group key.

BRIEF DESCRIPTION OF THE DRAWINGS

FIG. 1 is a schematic diagram of an application scenario according to embodiments of the present disclosure.
FIG. 2 is a schematic flow chart of a key generation method according to an embodiment of the present disclosure.
FIG. 3 is a schematic flow chart of a key generation method according to another embodiment of the present disclosure.
FIG. 4 is a schematic diagram illustrating a scenario for a key generation method according to an embodiment of the present disclosure.
FIG. 5 is a schematic flow chart of a key generation method according to an embodiment of the present disclosure.
FIG. 6 is a schematic diagram illustrating simulation results for a key generation method according to embodiments of the present disclosure.
FIGS. 7-8 are schematic flow charts illustrating two other key generation methods according to an embodiment of the present disclosure.
FIG. 9 is a schematic block diagram of a first device according to an embodiment of the present disclosure.
FIG. 10 is a schematic block diagram of a target second device according to an embodiment of the present disclosure.
FIG. 11 is a schematic block diagram of a communication device according to embodiments of the present disclosure.
FIG. 12 is a schematic block diagram of a chip according to embodiments of the present disclosure.
FIG. 13 is a schematic block diagram of a communication system according to embodiments of the present disclosure.

DETAILED DESCRIPTION

The technical solutions of embodiments of the present disclosure may be applicable to various wireless communication systems, for example, long-term evolution (LTE), advanced LTE (LTE-A), new radio (NR), evolved NR, a wireless local area network (WLAN), a wireless fidelity (WiFi), or other communication systems.

Various embodiments of the present disclosure are described in connection with a network device and a terminal device. The terminal device may be mobile or fixed, and may also be referred to as a mobile station, a subscriber unit, etc. The terminal device may be a station in a WLAN, an intelligent terminal, a wireless modem, a pad, a laptop computer, etc. In embodiments of the present disclosure, the terminal may be a virtual reality (VR) terminal, an augmented reality (AR) terminal, a terminal in industrial control, a terminal in self-driving, a terminal in remote medicine, a terminal in smart grid, a terminal in transportation safety, a terminal in smart city, a wireless terminal in smart home, etc. By way of explanation rather than limitation, in embodiments of the present disclosure, the terminal device may also be a wearable device.

In embodiments of the present disclosure, the network device may be a device configured to communicate with a mobile device, and the network device may be an access point (AP) in a WLAN, or may be an evolutional Node B (eNB or eNodeB), or a relay station, or an in-vehicle device, or a wearable device in LTE, or a network device (gNB) in an NR network, or a network device in a future evolved public land mobile network (PLMN), or a network device in a non-terrestrial network (NTN), etc. By way of explanation rather than limitation, in embodiments of the present disclosure, the network device may be mobile. For example, the network device may be a mobile device.

It may be understood that, the terms "system" and "network" herein are usually used interchangeably throughout this disclosure. The term "and/or" herein only describes an association relationship between associated objects, which means that there can be three relationships. For example, *A* and/or *B* can mean *A* alone, both *A* and *B* exist, and *B* alone. In addition, the character "/" herein generally indicates that associated objects are in an "or" relationship. It may be understood that, "indication" referred to in embodiments of the present disclosure may be a direct indication, may be an indirect indication, or may mean that there is an association relationship. For example, *A* indicates *B* may mean that *A* directly indicates *B,* for instance, *B* can be obtained according to *A*; may mean that *A* indirectly indicates *B,* for instance, *A* indicates *C,* and *B* can be obtained according to *C*; or may mean that that there is an association relationship between *A* and *B*. In the elaboration of embodiments of the present disclosure, the term "correspondence" may mean that there is a direct or indirect correspondence between the two, may mean that there is an association between the two, or may mean a relationship of indicating and indicated or configuring and configured, etc.

In order for better understanding of technical solutions of embodiments of the present disclosure, the related art involved in the embodiments of the present disclosure will be illustrated. The following related art as an optional scheme can be arbitrarily combined with the technical solutions of embodiments of the present disclosure, which shall all belong to the scope of protection of embodiments of the present disclosure.

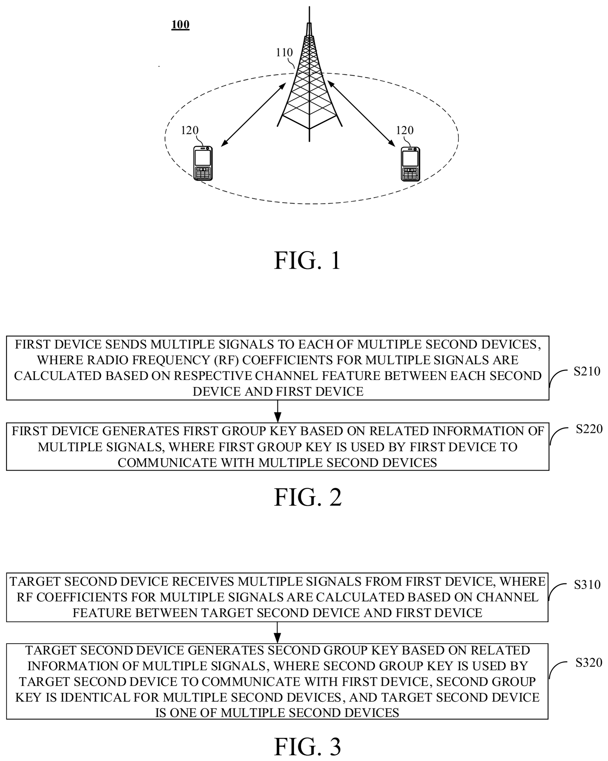

Exemplarily, FIG. 1 illustrates a communication system 100. The communication system 100 may include a network device 110 and two terminal devices 120. In a possible embodiment, the communication system 100 may include multiple network devices, and there may be other quantities of terminal devices in a coverage area of each of the network devices. Embodiments of the present disclosure are not limited in this regard. In a possible embodiment, the communication system 100 may further include other network entities such as a mobility management entity (MME), an access and mobility management function (AMF), or the like, and the embodiments of the present disclosure are not limited in this regard. The network devices may further include an access network device and a core network device(s). That is, the communication system may further include multiple core networks configured to communicate with the access network device. The access network device may be a base station in LTE, LTE-A, or NR systems. Taking the communication system illustrated in FIG. 1 as an example, the communication devices may include a network device and terminal devices that have communication functions. The communication device may also include other devices in the communication system, such as a network controller, an MME, and other network entities, which are not limited in the embodiments of the present disclosure.

For ease of understanding of the embodiments of the present disclosure, a brief illustration of the basic procedures and basic concepts involved in the embodiments of the present disclosure is provided below. It may be understood that, the basic procedures and basic concepts described below do not impose any limitation on the embodiments of the present disclosure.

FIG. 2 is a schematic flow chart of a key generation method according to an embodiment of the present disclosure. The method includes at least part of the following content.

S210, a first device sends multiple signals to each of multiple second devices, where radio frequency (RF) coefficients for the multiple signals are calculated based on a respective channel feature between each second device and the first device.

S220, the first device generates a first group key based on related information of the multiple signals, where the first group key is used by the first device to communicate with the multiple second devices.

FIG. 3 is a schematic flow chart of a key generation method according to another embodiment of the present disclosure. The method includes at least part of the following content.

S310, a target second device receives multiple signals from a first device, where RF coefficients for the multiple signals are calculated based on a channel feature between the target second device and the first device.

S320, the target second device generates a second group key based on related information of the multiple signals, where the second group key is used by the target second device to communicate with the first device, the second group key is identical for multiple second devices, and the target second device is one of the multiple second devices.

The first device is one of: a terminal device or a network device. The first device may be equipped with one or more antennas, and in a preferred example, the first device may be equipped with multiple antennas. It may be understood that, the solution provided in the embodiment can also be applied to a first device equipped with only one antenna, which is not limited herein.

In some embodiments, the first device is a terminal device. In such embodiments, communication between the first device and the second device (any second device) can be performed via a sidelink message(s).

In some embodiments, the first device may be a network device, for example, the network device may be an access network device (such as a station (STA), gNB, eNB, etc.). In such embodiments, communication between the first device and the second device may be performed via an access stratum (AS) message(s).

In some embodiments, the first device may be a network device, for example, the network device may be a core network device. In such embodiments, communication between the first device and the second device may be performed via a non-access stratum (NAS) message(s); alternatively, in such embodiments, message forwarding between the first device and the second device may be performed via an access network device. In the embodiment, possible message transmission methods are not exhaustively listed. In addition, the core network device includes at least one of: an authentication server function (AUSF), a unified data management (UDM), or an ambient power-enabled IoT (AIoT) network element. In other examples, in addition to the AUSF, UDM, and AIoT network element, the one or more core network devices may also include at least one of: an authentication credential repository and processing function (ARPF), an AMF, a user plane function (UPF), a security anchor function (SEAF), etc. It may be understood that, these are only exemplary illustrations, and in practical processing, the core network device may also include other devices of the core network, which are not exhaustively listed herein. Exemplarily, the AIoT network element may refer to a network element with AIoT functions or zero-power related functions. The network element with AIoT functions (or the network element with zero-power related functions) may be a core network element with AIoT functions (or with zero-power device related service functions), or a core network element serving AIoT functions (or serving zero-power devices), or a core network element at least having AIoT functions (for example, at least having AIoT (or zero-power device) group key generation functions) and so forth. It may be understood that, the AIoT network element may be a network element dedicated to serving AIoT (or zero-power devices), or may be an existing core network element with added AIoT related functions (or zero-power related functions). In the embodiment, possible cases are not exhaustively listed.

In some embodiments, the first device may be referred to as a reader, a tag reader, etc. Possible names or device types of the first device are not exhaustively listed herein.

The second device is a zero-power device. In some embodiments, the zero-power device may be an AIoT device. In some embodiments, the zero-power device may be an active zero-power device, or a passive zero-power device, or a semi-passive zero-power device, etc. In some embodiments, the second device may also be a terminal with relatively low computing capability. In some possible embodiments, the second device may be referred to as a tag. Possible names or device types of the second device are not exhaustively listed herein.

The multiple second devices may form a device group. The target second device is also a zero-power device, which may be any one of the multiple second devices, i.e., the target second device may be any one of the second devices in the device group formed by the multiple second devices.

In some possible embodiments, the respective channel feature between each second device and the first device may be calculated before the first device sends the multiple signals to each second device.

In the processing at the first device side, the respective channel feature between each second device and the first device are first calculated. The method further includes the following. The first device sends group key generation signaling to each second device; the first device receives a pilot signal from each second device, where the pilot signal is a reflected signal corresponding to the group key generation signaling; and the first device calculates the respective channel feature between each second device and the first device based on the pilot signal from each second device. The respective channel feature between each second device and the first device may form a channel feature matrix.

Taking any one of the multiple second devices as the target second device as an example, in the processing by the target second device, the method further includes the following. The target second device receives the group key generation signaling from the first device; the target second device sends a pilot signal to the first device, where the pilot signal is a reflected signal corresponding to the group key generation signaling, and the pilot signal is used by the first device to calculate a channel feature between the target second device and the first device. It is noted that, the target second device is described herein for illustration only. In actual processing, each of the multiple second devices performs the same processing as the target second device, and for brevity, the processing by each second device is not exhaustively described in the embodiment.

The channel feature may indicate a transmission loss of a signal in a channel and/or a transmission attenuation of a signal in a channel, etc. For example, the channel feature may include a parameter (s) related to a channel such as channel noise, and possible parameters that the channel feature may contain may not be exhaustively enumerated herein. The channel feature may alternatively be referred to as a channel or a channel estimation value or channel estimation, and possible names of the channel feature may not be exhaustively enumerated herein.

The group key generation signaling may be used to trigger the second device to send the pilot signal. It may be understood that, the group key generation signaling may also have other functions, which are not exhaustively described or limited in the embodiments. Moreover, information content that the group key generation signaling may carry is not limited in the embodiments.

In some embodiments, the first device may be equipped with only one antenna, in which case the group key generation signaling is sent directly by the antenna.

In some embodiments, the first device may be equipped with multiple antennas, and the group key generation signaling may be sent by a specified antenna of the first device. The specified antenna may be pre-configured or preset according to actual conditions. For example, the multiple antennas of the first device may be arranged as first antenna to M-th (where $M$ is an integer greater than or equal to 2) antenna according to positions, a processing order, a logical order, or other orders, and the first antenna may be designated as the specified antenna according to actual conditions, that is, the group key generation signaling may be sent by the first antenna of the first device. This is merely an illustrative illustration, and in actual processing, as long as any one of the M antennas is designated as an antenna for sending the group key generation signaling, it falls within the scope of protection of the present disclosure, and possible cases are not exhaustively listed herein.

In some embodiments, the group key generation signaling may be sent by broadcast or multicast, i.e., the first device broadcasts or multicasts the group key generation signaling to the multiple second devices, so that each second device can receive the group key generation signaling. In some embodiments, the group key generation signaling may be sent by unicast, i.e., the first device sends the group key generation signaling to each second device, respectively.

Taking any one of the multiple second devices as the target second device, the target second device sends the pilot signal to the first device, which may include that the target second device modulates the pilot signal onto a continuous carrier corresponding to the group key generation signaling and reflects the pilot signal to the first device. The group key generation signaling corresponds to a continuous carrier, which may refer to the following: the group key generation signaling is a continuous carrier, or the group key generation signaling is sent in a form of a continuous carrier, or the group key generation signaling is carried by a continuous carrier.

In some embodiments, each of the multiple second devices may send a pilot signal to the first device according to an anti-collision mechanism. The anti-collision mechanism may be pre-configured in each second device. The anti-collision mechanism may be a time slot anti-collision mechanism, or a time unit anti-collision mechanism, or a frequency-domain anti-collision mechanism, etc. For example, the anti-collision mechanism may enable each second device to determine a delay time unit after receiving the group key generation signaling, where the delay time unit is used by each second device to determine a sending time unit for sending a pilot signal, and delay time units corresponding to different second devices may be the same or different. The time unit may be a time slot, a symbol, millisecond, microsecond, or any other time unit, which is not exhaustively enumerated herein. It is also noted that, the above is merely an illustrative illustration. In actual processing, the anti-collision mechanism may also enable each second device to determine a sending frequency range for a pilot signal, where sending frequency ranges corresponding to different second devices may be the same or different. Additionally, the anti-collision mechanism may enable each second device to determine a corresponding delay time unit and/or a sending frequency range for a pilot signal. As long as mutual interference between pilot signals sent by different second devices can be avoided in the time domain and/or frequency domain, it falls within the scope of protection of the embodiment, without exhaustively enumerating possible contents of the anti-collision mechanism herein.

In some embodiments, the first device is equipped with multiple antennas.

The first device receives the pilot signal from each second device, which may refer to that the first device receives the pilot signal from each second device via each antenna in the multiple antennas. The first device calculates the respective channel feature between each second device and the first device based on the pilot signal from each second device, which may refer to that the first device calculates a respective channel feature between each second device and each antenna of the first device based on the pilot signal from each second device.

Taking any one second device as the target second device as an example, the first device receives the pilot signal from each second device via each antenna in the multiple antennas, which may refer to that the first device receives the pilot signal from the target second device via each antenna in the multiple antennas. The first device calculates the respective channel feature between each second device and each antenna of the first device based on the pilot signal from each second device, which refers to that the first device calculates the respective channel feature between the target second device and each antenna of the first device based on the pilot signal received from the target second device via each antenna in the multiple antennas.

Taking the multiple second devices as multiple tags, the target second device as $tag_1$ in the multiple tags, the first device as a reader equipped with $M$ antennas as an example, each of $M$ antennas of the reader receives a pilot signal reflected by $tag_1$, which can be represented as: $[y_1^1 \quad \cdots \quad y_M^1] = ref * s[h_1^1 h_1^1 \quad h_1^1 h_2^1 \quad \cdots \quad h_1^1 h_M^1]$, where $ref$ denotes a reflection coefficient of a tag, and a specific value of $ref$ is known at the reader end; $s$ denotes a pilot signal sent by a tag (for example, a pilot signal with content and/or format known to both the reader and the tag); $y_m^n$ denotes a pilot signal reflected by an $n$-th tag and received by an $m$-th antenna of the reader; $h_m^n$ denotes a channel feature between the $m$-th antenna of the reader and the $n$-th tag; $1 \leq m \leq M$ and $1 \leq n \leq N$, $N$ denotes the number (quantity) of all the tags in a device group, $N$ is an integer greater than or equal to 2, $M$ denotes the number of antennas of the reader, and $M$ is an integer greater than or equal to 2. In the above formula, $n$ equals 1, that is, s denotes a pilot signal sent by $tag_1$, $y_m^1$ denotes a pilot signal reflected by $tag_1$ and received by the $m$-th antenna of the reader, and $h_m^1$ denotes a channel feature between the $m$-th antenna of the reader and $tag_1$. In the embodiment, the reader may first send the group key generation signaling via a first antenna (that is, the first antenna is the designated antenna described above), and the pilot signal is modulated onto a continuous carrier corresponding to the group key generation signaling and then reflected. Therefore, the channel feature between the first antenna of the reader and $tag_1$ will affect a pilot signal reflected by tag1 and received by each antenna of the reader. Based on this, in the above formula, each $h_m^1$ needs to be multiplied by $h_1^1$ (that is, the channel feature between the first antenna of the reader and $tag_1$).

Furthermore, since *ref* in the above formula is known at the reader side and s may be a pilot signal with content and/or format known to both the reader and the tag, the reader can calculate, based on the above formula, the respective channel feature between $tag_1$ and each antenna of the reader, for example, expressed as: $\begin{bmatrix} h_1^1 & h_2^1 & \cdots & h_M^1 \end{bmatrix}$.

The above is merely an exemplary illustration using $tag_1$ as an example. The reader may perform the above processing for each tag. Finally, the reader may obtain the respective channel feature between each tag and the reader, and then form a channel feature matrix based on the respective channel feature between each tag and the reader, for example, which can be expressed in the following matrix form: $H = \begin{bmatrix} h_1^1 & \cdots & h_M^1 \\ \vdots & \vdots & \vdots \\ h_1^N & \cdots & h_M^N \end{bmatrix}$, where *H* denotes a channel feature matrix between all the tags and multiple antennas of the reader obtained by the reader. The illustration of $h_m^n$ in the channel feature matrix is the same as that in the foregoing embodiments and will not be repeated herein.

It may be understood that, the above is merely an exemplary illustration using the first device equipped with multiple antennas as an example. In some possible embodiments, the first device is equipped with only one antenna. In this case, the first device receives the pilot signal from each second device, which may refer to that the first device receives the pilot signal from each second device via the antenna. For example, taking each second device as a tag, the target second device as $tag_1$ in the multiple tags, the first device as a reader equipped with only one antenna as an example, the pilot signal reflected by $tag_1$ and received by the one antenna of the reader can be represented as:

$[y_1^1] = ref * s[h_1^1 h_1^1]$, where the illustrations of *ref* and *s* are the same as those in the foregoing embodiments and will not be repeated; $y_1^n$ denotes a pilot signal reflected by an *n*-th tag and received by the one antenna of the reader; $h_1^n$ denotes a channel feature between the one antenna of the reader and the n-th tag; $1 \leq n \leq N$, *N* is an integer greater than or equal to 2. In the above formula, *n* equals 1, that is, s denotes a pilot signal sent by $tag_1$, and the meanings of the respective contents in the above formula are similar to those in the foregoing example and will not be repeated herein. In this embodiment, the first device calculates the respective channel feature between each second device and the first device based on the pilot signal from each second device, which may refer to that the first device calculates the respective channel feature between each second device and the one antenna of the first device based on the pilot signal from each second device. The first device may then form a channel feature matrix from the respective channel feature between each second device and the one antenna of the first device, for example, the channel feature matrix can be expressed as:

$H = \begin{bmatrix} h_1^1 \\ \vdots \\ h_1^N \end{bmatrix}$, where *H* denotes a channel feature matrix between all the tags and the reader obtained by the reader, and the illustration of $h_1^n$ in the channel feature matrix is the same as those in the foregoing embodiments and will not be repeated herein.

After obtaining the above channel features, the first device may calculate an RF coefficient(s). The method further includes the following. The first device calculates one or more RF coefficients based on the respective channel feature between each second device and the first device, where different RF coefficients in the one or more RF coefficients correspond to different second devices.

Any one RF coefficient may be used to cancel out a corresponding channel feature (for example, to cancel out a transmission attenuation or transmission loss of a signal in a channel), so that a signal transmitted over the channel to a corresponding second device is the same as or substantially the same as a signal sent by the first device. Possible functions of the RF coefficient are not exhaustively enumerated herein. Exemplarily, the RF coefficient may also be referred to as an antenna weighting coefficient, or an antenna coefficient, or an antenna RF transmission coefficient, or an RF transmission coefficient, or a gain coefficient, or a transmission weighting coefficient, etc., and possible names of the RF coefficient are not exhaustively enumerated herein.

In some embodiments, multiple second devices in the device group may be divided into one or more groups.

Different RF coefficients in the one or more RF coefficients correspond to different groups of the multiple second devices, respectively, and different groups of the multiple second devices contain different second devices.

In the embodiment, the first device calculates an RF coefficient corresponding to each group (that is, each group of second devices). As to whether different groups correspond to the same RF coefficient, there is no limitation in the embodiment. In the following illustration, any one group, any one group of second devices, any group of second devices, and the second devices in any one group all indicate the same meaning, and repeated explanation is omitted. It may be noted that, the meaning of any group of second devices is different from that of the device group. The device group (or the multiple second devices in the device group) means all the second devices in the device group, while any group of second devices means any one group in the device group or second devices in any one group in the device group, that is, when the concept of group is involved in the following illustration, as long as it is not emphasized as the device group, it all means the group (that is, a group of second devices in the device group), and no repeated explanation will be given below.

Taking any one group as the $k$-th ($k$ is a positive integer) group of second devices as an example, the first device calculates one or more RF coefficients based on the respective channel feature between each second device and the first device, which may be as follows. The first device forms the $k$-th channel matrix based on a respective channel feature between each second device in the $k$-th group of second devices and the first device, calculates a right inverse matrix of the $k$-th group channel matrix, and calculates the $k$-th RF coefficient in the one or more RF coefficients based on the right inverse matrix of the k-th group channel matrix, where the $k$-th RF coefficient corresponds to the $k$-th group of second devices.

The number of groups that can be obtained from all the second devices in the device group may equal to the ceiling of the division of the number of the second devices in the device group by the number of antennas of the first device, for example, which may be expressed as $K = ceil(N/M)$ or $K = \lceil N/M \rceil$, where ceil() indicates rounding up, and $\lceil \rceil$ also indicates rounding up, the two are just used in different computing tools, the meanings of $N$ and $M$ in the formula are the same as those in the foregoing embodiment and are not repeated, $K$ indicates the number of groups, and $K$ is an integer greater than or equal to 1. The number of the one or more RF coefficients may equal to the number of the groups, both being $K$. That is, the k-th RF coefficient may correspond to the $k$-th group of second devices, and $k$ is greater than or equal to 1 and less than or equal to $K$.

The first device forms the $k$-th channel matrix based on the respective channel feature between each second device in the $k$-th group of second devices and the first device, which may be as follows. The first device extracts the respective channel feature corresponding to each second device in the $k$-th group of second devices from the channel feature matrix between the second devices and the first device, to form the $k$-th channel matrix. The $k$-th channel matrix may include channel features corresponding to the $(k-1)M+1$-th second device to the $(k-1)M+M$-th second device.

For example, the $k$-th channel matrix may be represented as ($1 \le k \le K$): $H_k = \begin{bmatrix} H((k-1)M+1) \\ \vdots \\ H((k-1)M+M) \end{bmatrix}$; where

$H(x)$ represents the x-th row in $H$ (channel feature matrix), $x = (k-1)M+1$ denotes the $(k-1)M+1$-th row in $H$, that is, a channel feature corresponding to the $(k-1)M+1$-th second device, and $x = (k-1)M+M$ denotes the $(k-1)M+M$-th row in $H$, that is, a channel feature corresponding to the $(k-1)M+M$-th second device.

For another example, assuming $N=4$ and $M=2$, then $H = \begin{bmatrix} h_1^1 & h_2^1 \\ \vdots & \vdots \\ h_1^4 & h_2^4 \end{bmatrix}$ and $K$ equals 2, where when $k$ equals 1, the 1st channel matrix is $H_1 = \begin{bmatrix} H(1) \\ H(2) \end{bmatrix}$, where $H(1) = [h_1^1 \quad h_2^1]$, $H(2) = [h_1^2 \quad h_2^2]$, and so on, the 2nd group channel matrix $H_2 = \begin{bmatrix} H(3) \\ H(4) \end{bmatrix}$ when $k$ equals 2 can be obtained, which is not repeated.

The right inverse matrix of the $k$-th channel matrix may be calculated using the following formula:

$$\boldsymbol{H}_k^{inv} = \boldsymbol{H}_k^{H}\left(\boldsymbol{H}_k \boldsymbol{H}_k^{H}\right)^{-1}$$, where $\boldsymbol{H}_k^{inv}$ represents a right inverse matrix of the k-th channel matrix, $\boldsymbol{H}_k$

represents the *k*-th channel matrix, and $H_k^H$ represents a transpose matrix of the *k*-th channel matrix.

The *k*-th RF coefficient in the one or more RF coefficients is calculated based on the right inverse matrix of the *k*-th channel matrix, which may refer to that the *k*-th RF coefficient in the one or more RF coefficients is obtained by adding all the columns of the right inverse matrix of the *k*-th channel matrix. For example, the *k*-th RF coefficient may be obtained through the following formula: $w_k = sum\_column(H_k^{inv})$,, where $w_k$ represents the *k*-th RF coefficient, and *sum_column*() indicates adding all columns of the matrix $H_k^{inv}$.

In some embodiments, the first device sends the multiple signals to each of the multiple second devices, which may mean that the first device sends the multiple signals to each second device in the *k*-th group of second devices based on the *k*-th RF coefficient in the one or more RF coefficients, where different RF coefficients in the one or more RF coefficients correspond to different groups of the multiple second devices, respectively, and the different groups of the multiple second devices contain different second devices, the *k*-th group of second devices is one of the one or more groups of the multiple second devices, and *k* is a positive integer. That is, the first device sequentially uses respective RF coefficient corresponding to each group of second devices in the *K* groups of second devices to send the i-th signal in the multiple signals to each group of second devices, where *i* is a positive integer. For example, in the case where the multiple second devices are *N* second devices and the *N* second devices are divided into *K* groups, when the *i*-th signal in the multiple signals is generated, the first device sequentially uses the respective RF coefficient corresponding to each group of second devices in the *K* groups of second devices to send the *i*-th signal to each group of second devices; then, when the *(i+1)*-th signal in the multiple signals is generated, the first device similarly sequentially uses the respective RF coefficient corresponding to each group of second devices in the *K* groups of second devices to send the *(i+1)*-th signal to each group of second devices. That is, the *i*-th signal will be sent *K* times at the first device side, and each time will be sent to each second device in a different group, so that each second device can receive the same *i*-th signal; correspondingly, each second device will receive the *i*-th signal once.

Taking any second device as the target second device and the target second device as $tag_n$, the *i*-th signal received by $tag_n$ may be expressed as $r_i H_k w_k$, where $r_i$ denotes the *i*-th signal, and the other contents have the same meaning as those in the foregoing embodiment. Since by means of RF coefficient $w_k$, $H_k$ can be cancelled out, a signal received by $tag_n$ should be $r_i$, that is, 6, where $l_{k\_n \times 1}$ represents a $k\_n \times 1$ unit vector, $k\_n$ represents the number of rows of $H_k$, that is, the number of tags in the *k*-th group of tags, and all tags (each tag) in the *k*-th group of tags will receive $r_i$.

In some embodiments, in the case where the coherent time is relatively long, that is, the channel environment is static, the first device does not need to repeatedly perform sending the group key generation signaling to each second device, calculating the respective channel feature between each second device and the first device, and calculating the respective RF coefficient corresponding to each group of second devices. That is, after the first device calculates each RF coefficient, the first device can send multiple signals to each second device within each group, where the first device sends different signals in the multiple signals to the same second device using the same RF coefficient.

In the case where the coherent time is relatively short, that is, the channel environment is time-varying, the first device can repeat the aforementioned processing. For example, to send the *i*-th signal, the first device needs to perform sending the group key generation signaling to each second device, calculating the respective channel feature between each second device and the first device, and calculating the respective RF coefficient corresponding to each group of second devices (i.e., each RF coefficient), and then sends the *i*-th signal to each group of second devices based on the respective RF coefficient corresponding to each group of second devices. To send the *(i+1)*-th signal, the first device again performs sending the group key generation signaling to each second device, calculating the respective channel feature between each second device and the first device, and calculating the respective RF coefficient corresponding to each group of second devices, and then sends the *(i+1)-th* signal to each group of second devices based on the respective RF coefficient corresponding to each group of second devices.

In the case where the coherent time is relatively short, that is, the channel environment is time-varying, the first device can also determine, according to a specific coherent duration, when to repeat sending the group key generation signaling to each second device, calculating the respective channel feature between each second device and the first device, and calculating the respective RF coefficient corresponding to each group of second devices. For example, within the coherent duration, *A* (where *A* is an integer greater than or equal to 1) signals can be sent to each group of second devices. After completing the sending of the 1st signal to the *A*-th signal and before sending the *(A+1)*-th signal to each group of second devices, the first device again performs sending the group key generation signaling to each group of second devices, calculating the respective channel feature between each second device and the first device, and calculating the respective RF coefficient corresponding to each group of second devices, and then sends the *(A+1)*-th signal to each group of second devices based on the respective RF coefficient corresponding to each group of second devices. The next cycle proceeds similarly. Before sending the *(2A+1)*-th signal to each group of second devices, calculating each RF coefficient is performed again, and so forth, which is not be repeated here.

Whether the coherent time is relatively long or short can be determined based on a preset duration threshold. For example, in the case where the coherent time exceeds the duration threshold, the coherent time is relatively long, i.e., the channel environment is static; in the case where the coherent time is less than or equal to the duration threshold, the coherent time is relatively short, i.e., the channel environment is time-varying. The duration threshold can be configured according to actual conditions, for example, the duration threshold may be related to the number of second devices actually included in the device group and/or a duration required to send a signal once, and so on. All possible parameters for determining the duration threshold or determination methods for the duration threshold are not limited herein.

In addition, the aforementioned coherent time may also be referred to as coherent duration, and the coherent time can be determined according to actual conditions. In the embodiment, how to obtain or determine the coherent time is not limited. As long as the coherent time can be obtained in advance at the first device side before executing the whole solution provided by the disclosure, it falls within the scope of protection of the embodiment.

In some embodiments, the first device calculates a respective RF coefficient corresponding to each second device. Whether RF coefficients corresponding to different second devices are the same is not limited in the embodiment.

For example, taking any one second device as the target second device, the first device may calculate the right inverse matrix of the channel feature between the target second device and the first device, and calculate the RF coefficient corresponding to the target second device based on the right inverse matrix. Specifically, the RF coefficient corresponding to the target second device is calculated based on the right inverse matrix, which may refer to that the RF coefficient corresponding to the target second device is obtained through summing all columns of the right inverse matrix.

For instance, taking the target second device as $tag_n$ (or the $n$-th tag) and the first device as a reader as an example, a right inverse matrix of a channel feature between $tag_n$ and the first device may be calculated through the following formula: $H_n^{inv} = H_n{}^H\left(H_n H_n{}^H\right)^{-1}$, where $n$ denotes the number or index of a tag, which may be equal to 1 in this example; $H_n^{inv}$ denotes a right inverse matrix; $H_n$ denotes a channel feature matrix between the $n$-th tag and the reader; $H_n{}^H$ denotes a transpose matrix of the channel feature matrix between the $n$-th tag and the reader. Taking $n = 1$ as an example, the channel feature between $tag_1$ and the reader can be expressed as $H_1$, specifically $H_1 = [h_1^1 \quad h_2^1 \quad \cdots \quad h_M^1]$ or $H_1 = [h_1^1]$. The meanings of the contents included in the aforementioned formula are the same as those in the preceding embodiments and will not be repeated here.

Further, obtaining the RF coefficient corresponding to $tag_n$ through summing all columns of the right inverse matrix can be expressed as: $w_n = sum\_column(H_n^{inv})$, where $w_n$ denotes a RF coefficient corresponding to $tag_n$, and $sum\_column()$ denotes summing all columns of matrix $H_n^{inv}$.

In some embodiments, the first device sends the multiple signals to each of the multiple second devices, which may refer to that the first device sequentially uses the respective RF coefficient corresponding to each second device to send the $i$-th signal to each second device, where $i$ is a positive integer. For example, in the case where the multiple second devices are $N$ ($N$ is an integer greater than or equal to 2) second devices, when the first device generates the $i$-th signal in the multiple signals, the first device sequentially uses the respective RF coefficient corresponding to each of the $N$ second devices to send the $i$-th signal to each second device; then, when the first device generates the $(i+1)$-th signal in the multiple signals, the first device likewise sequentially uses the respective RF coefficient corresponding to each of the $N$ second devices to send the $(i+1)$-th signal to each second device. That is, the $i$-th signal will be sent $N$ times at the first device side, each time to a different second device, so that each second device can receive the same $i$-th signal; correspondingly, any one second device receives the $i$-th signal once.

Taking any one second device as the target second device and the target second device as $tag_n$, the $i$-th signal received by $tag_n$ can be expressed as: $r_i H_n w_n$, where $r_i$ denotes the $i$-th signal, and meanings of other contents are the same as those in the forging embodiments. Since by means of RF coefficient $w_n$, $H_n$ can be cancelled out, the signal received by $tag_1$ should be $r_i$, that is, $r_i H_n w_n = r_i I_{n\_n \times 1}$, where $I_{n\_n \times 1}$ denotes a $n\_n \times 1$ unit vector; $n\_n$ denotes the number of rows of $H_n$, i.e, the number of tags, which is 1 in the embodiment because one tag corresponds to one $H_n$ in the embodiment .

In some embodiments, in a case where the coherent time is relatively long, that is, the channel environment is static, the first device does not need to repeatedly perform sending the group key generation signaling to each second device, calculating the respective channel feature between each second device and the first device, and calculating the respective RF coefficient corresponding to each second device. That is, after the first device calculates the respective RF coefficient corresponding to each second device, the first device can send the multiple signals to each of the multiple second devices, where the first device sends different signals in the multiple signals to the same second device using the same RF coefficient.

In the case where the coherent time is relatively short, that is, the channel environment is time-varying, the first device can repeat the aforementioned processing. For example, to send the i-th signal, the first device needs to perform sending the group key generation signaling to each second device, calculating the respective channel feature between each second device and the first device, and calculating the respective RF coefficient corresponding to each second device, and then sends the i-th signal to each second device based on the respective RF coefficient corresponding to each second device; to send the *(i+1)-th* signal, the first device again performs sending the group key generation signaling to each second device, calculating the respective channel feature between each second device and the first device, and calculating the respective RF coefficient corresponding to each second device, and then sends the *(i+1)-th* signal to each second device based on the respective RF coefficient corresponding to each second device.

In the case where the coherent time is relatively short, that is, the channel environment is time-varying, the first device may also determine, according to a specific coherent duration, when to repeat sending the group key generation signaling to each second device, calculating the respective channel feature between each second device and the first device, and calculating the respective RF coefficient corresponding to each second device. For example, within the coherent duration, *B* (where *B* is an integer greater than or equal to 1) signals may be sent to each second device, and after completing the sending of signals 1 to *B,* before sending the *(B+1)-th* signal to each second device, the first device again performs sending the group key generation signaling to each second device, calculating the respective channel feature between each second device and the first device, and calculating the respective RF coefficient corresponding to each second device, and then sends the *(B+1)-th* signal to each second device based on the respective RF coefficient corresponding to each second device. The next cycle will proceed similarly, which will not be repeated here.

The illustration of the coherent time is the same as that in the preceding embodiments and will not be repeated here.

In some possible embodiments, the first device generates the first group key based on the related information of the multiple signals as follows. The first device obtains multiple first quantization results based on the related information of the multiple signals; and the first device generates the first group key based on the multiple first quantization results.

In the processing of the first device sending the multiple signals to each second device as described in the foregoing embodiments, taking any signal as the *i*-th signal as an example, the first device may send the *i*-th signal to different second devices based on respective RF coefficients corresponding to different second devices, or send the *i*-th signal to each second device in different groups based on respective RF coefficients corresponding to different groups. The number of times the *i*-th signal is sent depends on the number of second devices or groups, but in any case, the first device itself can obtain related information of the *i*-th signal, that is, the first device itself can obtain the related information of each signal.

Still taking any one signal as the *i*-th signal as an example, the first device obtains the multiple first quantization results based on the related information of the multiple signals as follows. The first device determines a first quantization range corresponding to the *i*-th signal based on the related information of the *i*-th signal in the multiple signals, and takes a first quantization value corresponding to the first quantization range as the *i*-th first quantization result in the multiple first quantization results, where the first quantization range is one of multiple first candidate quantization ranges, each of the multiple first candidate quantization ranges has a corresponding first candidate quantization value, and *i* is a positive integer.

It may be noted that, the first device performs, for each signal, the same processing as that performed for the *i*-th signal, and multiple quantization results can finally be obtained. In this embodiment, detailed illustration is given for the *i*-th signal, and detailed illustration will not be given for each signal.

In some embodiments, the processing by the first device may further include the following. The first device can determine, based on the related information of the multiple signals, a maximum value and a minimum value of a value range of the related information; divide the value range of the related information into $Q$ first candidate quantization ranges based on quantization order $Q$, and determine a respective first candidate quantization value corresponding to each of the $Q$ first candidate quantization ranges, where $Q$ is an integer greater than or equal to 2.

Here, quantization order $Q$ may be set according to an actual situation, for example, quantization order $Q$ may be 16, 32, 8, 4, 5, 21, or greater or smaller. Possible values of $Q$ are not enumerated exhaustively herein. The respective first candidate quantization value corresponding to each first candidate quantization range may be set according to an actual situation, any one first candidate quantization value may be binary, and the length of the first candidate quantization value may be related to a quantization order, for example, the first candidate quantization value may have a length of $\log_2 Q$ bits. Exemplarily, the first candidate quantization value may be a Gray code having a length of $\log_2 Q$.

The first device determines the first quantization range corresponding to the *i*-th signal in the multiple signals based on the related information of the *i*-th signal, and take the first quantization value corresponding to the first quantization range as the *i*-th first quantization result in the multiple first quantization results, which may refer to that: the first device determines, in the $Q$ first candidate quantization ranges, the first quantization range corresponding to the related information of the i-th signal in the multiple signals, and takes the first quantization value corresponding to the first quantization range as the *i*-th first quantization result in the multiple first quantization results. It may be understood that, the foregoing determination of the $Q$ first candidate quantization ranges and the respective first candidate quantization value corresponding to each first candidate quantization range may be performed only once, and then, based on the foregoing $Q$ first candidate quantization ranges and the respective first candidate quantization value corresponding to each first candidate quantization range, a respective quantization result corresponding to the related information of each signal may be determined, which will not be described in detail herein.

In some embodiments, in order to reduce differences in quantization results caused by small errors around quantization boundaries, the first device may also round all the obtained related information of signals to the nearest integer, and then determine the foregoing $Q$ first candidate quantization ranges and the respective first candidate quantization value corresponding to each first candidate quantization range; and/or, to perform quantization for each signal, the first device may also round the related information of each signal to the nearest integer and then perform quantization.

It may be noted that, the foregoing embodiment is merely an exemplary illustration for quantizing the related information of the multiple signals. In actual processing, a quantization method(s) usable in the embodiment is not limited to the method described herein, for example, a singular value decomposition (SVD) method may be adopted, or other quantization methods may be used, which is not limited and exhaustively enumerated in the embodiment.

In some embodiments, the related information of the multiple signals includes at least one of: a strength of each signal in the multiple signals or a phase of each signal in the multiple signals.

It may be noted that, the strength of each signal may alternatively be described as an amplitude of each signal.

For example, the related information of the multiple signals includes the strength of each signal. In this case, the processing by the first device may further include the following. The first device determines, based on strength $P$ of each signal, maximum value $P_{max}$ and minimum value $P_{min}$ of a strength value range of all signals (that is, the value range of P), namely $P_{min} \leq P \leq P_{max}$; then, based on quantization order $Q$, divides the value range of $P$ into $Q$ first candidate quantization ranges, and determines a respective Gray code having a length of $\log_2 Q$ corresponding to each of the $Q$ first candidate quantization ranges. In order to reduce differences in quantization results caused by small errors around quantization boundaries, the first device may also round all obtained strength $P$ of signals to the nearest integer, and then determine the $Q$ first candidate quantization ranges and the respective first candidate quantization value corresponding to each first candidate quantization range; and/or, to perform quantization for each signal, the first device may also round strength $P$ of each signal to the nearest integer and then perform quantization. In this example, the $Q$ first candidate quantization ranges may also be referred to as $Q$ first candidate strength quantization ranges. In some possible embodiments, when the first device sends each signal, the first device may send a value related to the strength of each signal, for example, may send a square root value of the strength of each signal, an original value of the strength of each signal, or a root-power value of the strength of each signal, etc., and possible cases are not exhaustively enumerated herein.

For example, the related information of the multiple signals includes the phase of each signal. In this case, the processing by the first device may further include the following. The first device determines, based on phase $\varphi$ of each signal, maximum value $\varphi_{max}$ and minimum value $\varphi_{min}$ of a phase value range of all signals (that is, the value range of $\varphi$), namely $\varphi_{min} \leq \varphi \leq \varphi_{max}$; then, based on quantization order $Q$, divides the value range of $\varphi$ into $Q$ first candidate quantization ranges, and determines a respective Gray code having a length of $\log_2 Q$ corresponding to each of the $Q$ first candidate quantization ranges. In order to reduce differences in quantization results caused by small errors around quantization boundaries, the first device may also round all obtained phase $\varphi$ of signals to the nearest integer, and then determine the $Q$ first candidate quantization ranges and the respective first candidate quantization value corresponding to each first candidate quantization range; and/or, to perform quantization for each signal, the first device may also round phase $\varphi$ of each signal to the nearest integer and then perform quantization. In this example, the $Q$ first candidate quantization ranges may also be referred to as $Q$ first candidate phase quantization ranges.

It may be understood that, the foregoing is merely illustrative, and in actual processing, the strength and phase of each signal may be used in combination. For example, it is possible to obtain $Q$ first candidate strength quantization ranges and also obtain $Q$ first candidate phase quantization ranges, and the $q$-th first candidate strength quantization range and the $q$-th first candidate phase quantization range correspond to a same quantization value, where $q$ is an integer greater than or equal to 1 and less than or equal to $Q$, or $q$ is an integer greater than or equal to 0 and less than or equal to $Q-1$. To perform quantization for the $i$-th signal, a corresponding first quantization range may be determined according to either one of the strength and phase of the $i$-th signal, and then a quantization result may be determined. Alternatively, a first strength quantization range corresponding to the strength of the $i$-th signal and a first phase quantization range corresponding to the phase of the $i$-th signal may be determined; if the two are the same, a first quantization value corresponding to any one of the first quantization ranges is determined as the quantization result; if the two are not consistent, either one of the two may be designated as the criterion, for example, uniformly designating the signal strength as the criterion. Possible examples are not exhaustively numerated here.

In some embodiments, the first device generates the first group key based on the multiple first quantization results, which may include that the first device obtains the first group key by combining the multiple first quantization results based on a specified order.

The specified order may be set according to an actual situation. In some embodiments, the specified order may be an ascending order, that is, the first group key may be "1st first quantization result, 2nd first quantization result ... last first quantization result" arranged in such order and combined. In some embodiments, the specified order may be a descending order, that is, the first group key may be "last first quantization result, second-to-last first quantization result ... 1st first quantization result" arranged in such order and combined. In some embodiments, the specified order may be a random order, for example, if there are 4 first quantization results in total, the specified order may be 2, 4, 3, 1, that is, the first group key may be "2nd first quantization result, 4th first quantization result, 3rd first quantization result, 1st first quantization result" arranged in such order and combined. In this embodiment, the specified order may be set according to an actual situation, and no exhaustive enumeration is given herein. It may be understood that, the foregoing is also merely illustrative, and as long as each second device and the first device adopt the same specified order, it falls within the scope of protection of the embodiment.

In some embodiments, the first device generates the first group key based on the multiple first quantization results, which may include that the first device calculates the first group key from the multiple first quantization results based on a preset calculation method.

In this embodiment, the preset calculation method may be set according to an actual situation, for example, it may be any one or any combination of exclusive OR (XOR) calculation, direct concatenation calculation, functions, etc. For example, XOR calculation may be used, that is, XOR calculation is performed on all the first quantization results to obtain the first group key. In another example, function calculation may be used, for example, the function is a key derivation function (KDF), in which case the multiple first quantization results may all be used as the input of the KDF, and the first group key may be obtained through KDF calculation. It may be noted that, the foregoing is also merely illustrative, and as long as each second device and the first device adopt the same preset calculation method, it falls within the scope of protection of the embodiment.

In some possible embodiments, the target second device generates the second group key based on the related information of the multiple signals as follows. The target second device obtains multiple second quantization results based on the related information of the multiple signals; and the target second device generates the second group key based on the multiple second quantization results.

As already described in the foregoing embodiments, the target second device is any one of all the second devices in the device group, and the processing by each second device in the device group is the same as that by the target second device, which is not repeated here.

The group key generated by the target second device is referred to as the second group key here. This is because the target second device generates the second group key based on the multiple signals received, rather than being generated by the first device. Therefore, the group key obtained by the target second device may be the same as or different from that obtained by the first device, and accordingly, further check is required to determine whether the second group key generated by the target second device is the same as the first group key generated by the first device. Therefore, in the embodiment, the group key generated by the target second device (i.e., any second device) and the group key generated by the first device are expressed separately. It may be understood that, in an ideal state, the group key generated by the target second device (i.e., any second device) and the group key generated by the first device should be the same, that is, in an ideal state, the first group key may be the same as the second group key.

In some embodiments, the target second device obtains the multiple second quantization results based on the related information of the multiple signals as follows. The target second device determines a second quantization range corresponding to the $i$-th signal based on the related information of the $i$-th signal in the multiple signals, and takes a second quantization value corresponding to the second quantization range as the $i$-th second quantization result in the multiple second quantization results, where the second quantization range is one of multiple second candidate quantization ranges, each second candidate quantization range in the multiple second candidate quantization ranges has a corresponding second candidate quantization value, and $i$ is a positive integer. It may be pointed out that, the target second device performs, for each signal, the same processing as for the $i$-th signal, and finally can obtain multiple quantization results. In the embodiment, an illustration for the $i$-th signal is given, and no detailed illustration is given for each signal.

In some embodiments, the processing by the target second device may further include the following. The target second device may determine, based on the related information of the multiple signals, a maximum value and a minimum value of a value range of the related information; and divide the value range of the related information into $Q$ second candidate quantization ranges based on quantization order $Q$, and determine a respective second candidate quantization value corresponding to each of the $Q$ second candidate quantization ranges, where $Q$ is an integer greater than or equal to 2.

The specific processing of the target second device determining the $Q$ second candidate quantization ranges and determining the respective second candidate quantization value corresponding to each of the $Q$ second candidate quantization ranges is the same as the specific processing of the first device determining the $Q$ first candidate quantization ranges and determining the respective first candidate quantization value corresponding to each of the $Q$ first candidate quantization ranges, and therefore is not repeated herein.

The target second device determines, based on the related information of the $i$-th signal in the multiple signals, the second quantization range corresponding to the $i$-th signal, and takes the second quantization value corresponding to the second quantization range as the $i$-th second quantization result in the multiple second quantization results, which may refer to that: the target second device determines a second quantization range corresponding to the related information of the $i$-th signal in the $Q$ second quantization ranges, and takes a second quantization value corresponding to the second quantization range as an $i$-th second quantization result in the multiple second quantization results. The processing of the target second device obtaining the $i$-th second quantization result is the same as the manner by which the first device obtains the $i$-th first quantization result, which is not repeated here.

In some embodiments, the related information of the multiple signals also includes at least one of: a strength of each signal in the multiple signals or a phase of each signal in the multiple signals. The specific illustration of the target second device determining the $Q$ second candidate quantization ranges and the respective second candidate quantization value corresponding to each second candidate quantization range under different conditions where the related information of each signal is strength and/or phase is similar to the specific illustration of the first device determining the $Q$ first candidate quantization ranges and the respective first candidate quantization value corresponding to each first candidate quantization range, which is not repeated here.

In some possible embodiments, in the case where the related information of each signal is the strength of each signal, the target second device, when receiving each signal, may receive a related value of the strength of each signal, such as a square root of the strength of each signal, an original value of the strength of each signal, or a root-power value of the strength of each signal, etc., without exhausting all possible cases here. Correspondingly, the target second device may obtain a squared value of the related value of the strength of each signal, the original value of the related value of the strength of each signal, or a power value of the strength of each signal, and then determine the $Q$ second candidate quantization ranges and the respective second candidate quantization value corresponding to each second candidate quantization range. The specific processing of determining the $Q$ second candidate quantization ranges and the respective second candidate quantization value corresponding to each second candidate quantization range is not repeated here.

In some embodiments, the target second device generates the second group key based on the multiple second quantization results, which may include that the target second device obtains the second group key by combining the multiple second quantization results according to a designated order. The illustration of the designated order and the specific combing process are the same as the process where the first device obtains the first group key by combining the multiple first quantization results according to a designated order, which is not repeated here.

In some embodiments, the target second device generates the second group key based on the multiple second quantization results, which may include that the target second device calculates the second group key from the multiple second quantization results using a preset calculation method. The specific illustration of the preset calculation method is the same as the related illustration for the first device, which is not repeated here.

It may be pointed out that, no matter whether the designated order or the preset calculation method is used, the first device and each second device need to use the same method to respectively generate their own group keys, which is not repeated here.

In some possible embodiments, the related information of the multiple signals includes a key sequence carried in each signal in the multiple signals. The first device generates the first group key based on the related information of the multiple signals as follows. The first device generates the first group key based on the key sequence carried in each signal in the multiple signals.

Here, key sequences carried in different signals may be randomly generated by the first device. The manner in which the first device generates each key sequence is not limited in the embodiment.

A $j$-th signal in the multiple signals carries one or multiple data segments, and a different data segment in the one or multiple data segments is calculated based on an identifier (ID) of a different second device and a $j$-th key sequence, where $j$ is a positive integer.

In some embodiments, the multiple signals refer to multiple signals sent to each second device.

In one case, the first device may send signals to each second device based on a respective RF coefficient corresponding to each second device, that is, the same signal will be sent to each second device and sent multiple times under this case.

In this case, in the case where the first device intends to send a signal carrying the $j$-th key sequence, the first device needs to send the signal to $N$ second devices, respectively, where the definition of the value of $N$ is the same as that in the previous embodiments and is not repeated here. The $j$-th signal sent to the $n$-th second device may carry a data segment that is calculated based on the ID of the $n$-th second device and the $j$-th key sequence; similarly, the $j$-th signal sent to the $(n+1)$-th second device may carry a data segment that is calculated based on the ID of the $(n+1)$-th second device and the $j$-th key sequence, without exhausting all cases here.

The calculation method can be set according to actual situations, for example, may be direct concatenation calculation, XOR calculation, function calculation, or a combination of one or more of these methods. For example, the calculation method is XOR calculation, the $j$-th signal sent to the $n$-th second device is expressed as $r_{jn}$, and a frame

structure of $r_{jn}$ (i.e., a data segment of $r_{jn}$) is designed as $\left[ID_n^k \oplus \boldsymbol{k_j}\right]$, where $\oplus$ represents XOR operation, $ID_n^k$ represents the ID of the $n$-th tag, and $\boldsymbol{k_j}$ represents the $j$-th key sequence randomly generated by the reader.

In a case, the first device may send signals to each second device in each group based on the respective RF coefficient corresponding to each group of second devices, that is, the same signal will be sent multiple times in units of groups under this case.

In some possible embodiments, in the case where the first device intends to send a signal carrying the $j$-th key sequence, the first device needs to send the signal to $K$ groups of second devices respectively, that is, send the signal $K$ times. The definition of the value of $K$ is the same as that in the previous embodiments and is not repeated here. The $j$-th signal sent to the $k$-th group of second devices may carry one or more data segments, where the number of data segments depends on the number of second devices included in the $k$-th group of second devices, and each of the one or more data segments is calculated based on the ID of each second device in the $k$-th group of second devices and the $j$-th key sequence. Similarly, the $j$-th signal sent to the $(k+1)$-th group of second devices may also carry one or more data segments, where the number of data segments depends on the number of second devices included in the $(k+1)$-th group, where each of the one or more data segments is calculated based on the ID of each second device in the $(k+1)$-th group and the $j$-th key sequence, and so on, which is not repeated here.

The calculation method is the same as that described in the previous embodiment and is not repeated. For example, the calculation method is XOR calculation, and a different data segment is calculated based on an ID of a different second device and the $j$-th key sequence, which may refer to that the respective data segment corresponding to each second device in the $k$-th group of second devices is obtained by performing XOR calculation on the ID of each second device and the $j$-th key sequence. For example, when sending the $j$-th key sequence for the $k$-th time, the $j$-th signal corresponding to the $k$-th group of second devices can be expressed as $r_{jk}$, and a frame structure of $r_{jk}$ (i.e., one or more data segments of $r_{jk}$) is designed as: $\left[ID_1^k \oplus \boldsymbol{k_j}, ID_2^k \oplus \boldsymbol{k_j}, \cdots, ID_n^k \oplus \boldsymbol{k_j}\right]$, where, $\oplus$ represents XOR operation, $ID_n^k$ represents an ID of an n-th tag in the $k$-th group of tags, and $\boldsymbol{k_j}$ represents the $j$-th key sequence randomly generated by the reader.

In some embodiments, the first device generates the first group key based on the key sequence carried in each of the multiple signals, which may refer to that: the first device obtains the first group key by combining the key sequence carried in each signal in a specified order. The specified order can be the same as that in the previous embodiments and is not repeated.

In some embodiments, the first device generates the first group key based on the key sequence carried in each of the multiple signals, which may refer to that: the first device calculates the first group key from the key sequence carried in each signal based on a preset calculation method. The preset calculation method can be the same as that in the previous embodiments and is not repeated.

In some possible embodiments, the related information of the multiple signals includes the key sequence carried in each of the multiple signals. The target second device generates the second group key based on the related information of the multiple signals as follows. The target second device generates the second group key based on the key sequence carried in each of the multiple signals.

The $j$-th signal in the multiple signals carries one or more data segments, where a different data segment in the one or more data segments is calculated based on the ID of a different second device and the $j$-th key sequence. The method further includes the following. The target second device extracts a target data segment corresponding to the target second device from the $j$-th signal, where $j$ is a positive integer; and the target second device calculates the $j$-th key sequence carried in the $j$-th signal based on the ID of the target second device and the target data segment. The calculation method should be the same as that used by the first device, which is not repeated here.

In one case, the first device can send signals to each second device based on the respective RF coefficient corresponding to each second device. In this case, the $j$-th signal sent by the first device to the target second device may carry one data segment that is calculated based on the ID of the target second device and the $j$-th key sequence. The target second device can directly extract the data segment from the $j$-th signal as the target data segment, and then calculate the $j$-th key sequence based on the ID of the target second device and the target data segment. For example, the calculation method is XOR calculation, and the target second device is the n-th tag, and thus the data segment extracted may be expressed as $\left[ID_n^k \oplus \boldsymbol{k_j}\right]$. The n-th tag can obtain $\boldsymbol{k_j}$ (the $j$-th key sequence) by performing XOR calculation on the ID of the n-th tag and the above data segment. The meanings of the contents in the above expression are the same as those in the previous embodiments and are not repeated.

In a case, the first device can send signals to each second device in each group of second devices based on the respective RF coefficient corresponding to each group. In this case, in the case where the target second device is a second device in the *k*-th group of second devices, the target second device will only receive the *j*-th signal (i.e., the signal carrying the *j*-th key sequence) sent by the first device for the *k*-th time. One or more data segments may be carried in the *j*-th signal sent for the *k*-th time. The target second device can directly extract the data segment corresponding to the target second device from the *j*-th signal as the target data segment, and then calculate the *j*-th key sequence based on the ID of the target second device and the target data segment.

In this case, the position of the data segment corresponding to the target second device can be set according to actual situations. For example, in the case where the target second device is the *n*-th second device in the *k*-th group of second devices, the corresponding data segment can be at the *n*-th position, or can be at another designated position, which is not limited in the embodiment. As long as it can be ensured that respective data segments corresponding to different second devices in the k-th group of second devices are at different positions, it falls within the scope of protection of the embodiment.

For example, the calculation method is XOR calculation, and when the first device sends the *j*-th key sequence for the *k*-th time, the *j*-th signal corresponding to the *k*-th group of second devices can be expressed as $r_{jk}$, and a frame structure of $r_{jk}$ (i.e., one or more data segments of $r_{jk}$) is denoted as $\left[ID_1^k \oplus k_j, ID_2^k \oplus k_j, \cdots, ID_n^k \oplus k_j\right]$. Assuming the target second device is the *n*-th tag, and a data segment corresponding to the target second device is at the *n*-th position, the target second device can extract the *n*-th data segment from $r_{jk}$, that is, "$ID_n^k \oplus k_j$" as the target data segment. Then, XOR calculation is performed again based on ID $ID_n^k$ of the target second device and "$ID_n^k \oplus k_j$" to obtain $k_j$ (the *j*-th key sequence). The meanings of the contents in the above expression are the same as those in the previous embodiments and are not repeated.

In some possible embodiments, the multiple signals are used by each second device to generate the second group key. The method further includes the following. The first device calculates group key check information based on the first group key, where the group key check information is used by each second device to check a consistency between the second group key and the first group key. The first device sends a first message to each second device, where the first message carries the group key check information.

Taking any one of the second devices in the device group as a target second device as an example, in the processing by the target second device, the method further includes the following. The target second device receives the first message from the first device, where the first message carries the group key check information, the group key check information is calculated by the first device based on the first group key, and the first group key is generated by the first device based on the multiple signals. The target second device calculates check information based on the second group key, and the target second device checks a consistency between the second group key and the first group key based on the group key check information and the check information.

The manner in which each second device generates the second group key has been described in detail in the previous embodiments and will not be repeated herein.

In the embodiment, after obtaining its own group key, i.e., the first group key, the first device may initiate a check procedure to determine whether the respective second group key generated by each second device is consistent with the first group key of the first device.

In some embodiments, the first device calculates the group key check information based on the first group key, which may include that the first device obtains a first value by mapping the first group key through a first preset function, and takes the first value as the group key check information. The first preset function may be a hash function, and the specific algorithm of the hash function may be set according to actual conditions, which is not limited in the embodiment. Additionally, the first preset function may be another type of function, as long as a corresponding mapped value can be obtained through a function, it falls within the scope of protection of the embodiment.

In some embodiments, the first device calculates the group key check information based on the first group key, which may include that the first device calculates a cyclic redundancy check (CRC) code of the first group key and takes the CRC code as the group key check information. The specific algorithm for calculating the CRC code may be set according to actual conditions, which is not limited in the embodiment.

The first device may send the first message to each second device by multicast, broadcast, or unicast, all of which are within the scope of protection of the embodiment. In a preferred embodiment, the first device may broadcast the first message to all the second devices.

In some embodiments, the target second device calculates the check information based on the second group key, which may include that the target second device obtains a second value by mapping the second group key through a first preset function and takes the second value as the check information. The first preset function is the same as that described in the previous embodiments.

In some embodiments, the target second device calculates the check information based on the second group key, which may include that the target second device calculates a CRC code of the second group key and takes the CRC code as the check information.

It may be noted that, the specific process for the target second device to calculate the check information may be the same as the manner used by the first device to calculate the group key check information.

In some embodiments, the method further includes at least one of the following: in the case where the second group key is consistent with the first group key, the target second device sends a second message to the first device, where the second message indicates that the target second device has checked that the second group key is consistent with the first group key; or in the case where the second group key is not consistent with the first group key, the target second device sends a third message to the first device, where the third message indicates that the target second device has checked that the second group key is not consistent with the first group key.

Correspondingly, in the processing by the first device, the method further includes one of the following: the first device receives the second message from the target second device, where the second message indicates that the target second device has checked that the second group key is consistent with the first group key, and the target second device is one of the multiple second devices; or the first device receives the third message from the target second device, where the third message indicates that the target second device has checked that the second group key is not consistent with the first group key.

In the case where the first device receives the second message from the target second device, the first device may record the target second device as a second device that has successfully generated a group key, and then communicate with the target second device using the first group key, where such communication may refer to decrypting received data based on the first group key and/or encrypting transmitted data based on the first group key. In other words, upon receiving the second message from any second device, the first device may determine that the second device has successfully generated a group key, record the second device, and perform communication with the second device.

Similarly, in the case where the target second device sends the second message, the target second device can communicate with the first device using the second group key, where such communication may refer to decrypting received data based on the second group key and/or encrypting transmitted data based on the second group key.

In the case where the first device receives the third message from the target second device, the first device may continue to perform the foregoing processing for the target second device in the next round, so that the target second device generates a second group key identical to the first group key. Similarly, in the case where the target second device sends the third message, the target second device may wait for the next round to generate a group key.

In some possible embodiments, the multiple signals are used by each second device to generate the second group key, and the method further includes the following. The first device calculates group key error-correcting information based on the first group key, where the group key error-correcting information is used by each second device to correct the second group key to obtain a group key consistent with the first group key. The first device sends a fourth message to each second device, where the fourth message carries the group key error-correcting information.

Taking any one of the second devices in the device group as the target second device as an example, in the processing by the target second device, the method further includes the following. The target second device receives the fourth message from the first device, where the fourth message carries the group key error-correcting information, the group key error-correcting information is calculated by the first device based on the first group key, and the first group key is generated by the first device based on the multiple signals. The target second device obtains a group key in consistence with the first group key by correcting the second group key based on the group key error-correcting information.

The first device calculates the group key error-correcting information based on the first group key, which may include that the first device calculates a check code of the first group key based on a second preset calculation method, and takes the check code as the group key error-correcting information. The target second device obtains a group key in consistence with the first group key by correcting the second group key based on the group key error-correcting information, which may include that the target second device obtains a group key consistent with the first group key by performing error correcting decoding on the second group key based on an error correcting manner corresponding to the second preset method and using the group key error-correcting information.

The calculation function (or calculation manner) used by the second preset calculation method may be set according to actual situations. For example, any one or more of low density parity-check (LDPC) codes, Turbo decoding, etc. may be adopted. Possible manners are not exhaustively illustrated in the present disclosure, as long as a check code can be obtained through encoding a sequence to enable a peer to perform error correcting decoding, it falls within the scope of protection of the embodiment.

In some possible embodiments, the first device may trigger group key update.

In some embodiments, the first device may periodically trigger group key update. The length of the period may be set according to actual situations, for example, the period may be set to 7 days, 1 day, or longer or shorter, which is not exhaustively illustrated in the present disclosure.

In some embodiments, the first device may trigger group key update in the case where the number of second devices in the device group increases or decreases. The first device may determine the increase or decrease of the number of second devices in the device group by receiving indication information from a network device, where the indication information indicates that a new second device(s) has been added to or a second device(s) has been removed from the device group. The network device may be an access network device, a core network device, or an application function (AF), etc., which is not exhaustively illustrated herein.

The processing manner for the first device to perform group key update may include re-executing the manner provided in the foregoing embodiments, so that the first device and all second devices currently in the device group perform group key update.

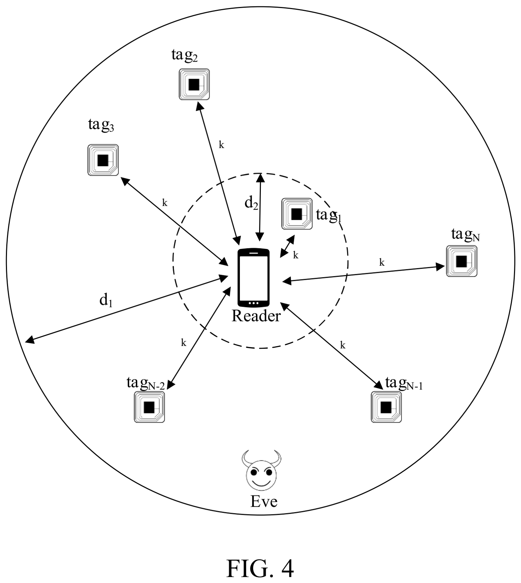

In combination with the following examples, taking the first device as a reader and assuming there are $N$ tags in the device group, the group key generation method provided in the present disclosure is illustratively described. The system consisted of the reader and $N$ tags is as illustrated in FIG. 4: within a region with the reader as the center and $d_1$ as a radius, there are $N$ tags in communication with the reader. The purpose of the group key scheme is to generate a commonly known group key $Gk$ between the reader and the $N$ tags. Meanwhile, an eavesdropper(s) attempts to obtain $k$ by eavesdropping on certain information during group key generation. To better reflect actual scenarios, it is assumed that the eavesdropper(s) is not within a safe region with the reader as the center and $d_2$ as the radius.

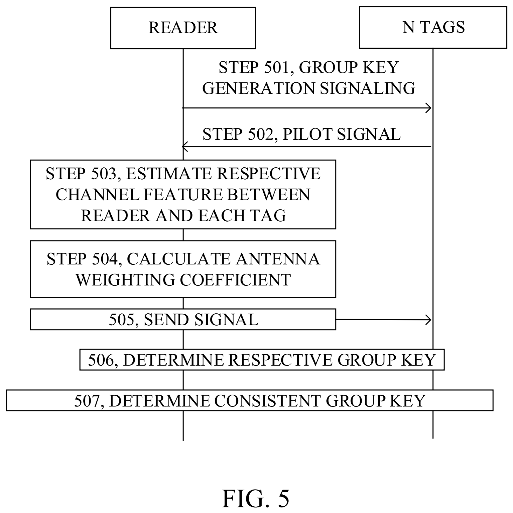

In combination with FIG. 5, one example is described. In the scheme of FIG. 5, all $N$ tags are single-antenna devices, and the reader is configured with $M$ antennas. The specific steps are as follows.

Step 501, the reader broadcasts group key generation signaling, for example, the group key generation signaling may be expressed as *message1.*

Step 502, upon that all the $N$ tags have received the group key generation signaling, all the $N$ tags sequentially reflect respective pilot signal s to the reader according to a time slot anti-collision mechanism.

Step 503, the reader sequentially receives the reflected pilot signal sent by each tag in step 502, and estimates a respective channel feature between each tag and the reader.

Taking $tag_1$ in the $N$ tags as an example, a continuous carrier (with amplitude 1) is sent by a first antenna of the reader, and a pilot signal reflected by $tag_1$ and received by the reader is denoted as:

$$[y_1^1 \quad \cdots \quad y_M^1] = ref * s[h_1^1 h_1^1 \quad h_1^1 h_2^1 \quad \cdots \quad h_1^1 h_M^1]$$

. By receiving the pilot signal, the reader can obtain the channel $[h_1^1 \quad h_2^1 \quad \cdots \quad h_M^1]$ between $tag_1$ and the reader. Finally, the reader obtains the channels between all tags and the reader:

$$H = \begin{bmatrix} h_1^1 & \cdots & h_M^1 \\ \vdots & \vdots & \vdots \\ h_1^N & \cdots & h_M^N \end{bmatrix}$$

. The meanings of the contents contained in each formula of this step are the same as those in the foregoing embodiments and are not repeated herein.

Step 504, the reader calculates an antenna weighting coefficient(s), which is the RF coefficient(s) described in the foregoing embodiments.

The specific process of this step is as follows: the reader divides $H$ into $K$ groups by row, where $K = ceil(N/M),$ and $ceil(*)$ represents rounding up; obtains a $k$-th ($1 \leq k \leq K$) channel matrix:

$$H_k = \begin{bmatrix} H((k-1)M+1) \\ \vdots \\ H((k-1)M+M) \end{bmatrix}$$

; calculates a right inverse matrix of the $k$-th channel matrix: $H_k^{inv} = H_k^{\ H}\left(H_k H_k^{\ H}\right)^{-1}$ ; calculates an antenna weighting coefficient corresponding to the $k$-th group (i.e., the $k$-th group of tags): $w_k = sum\_column(H_k^{inv})$. The meanings of the contents contained in each formula in this step are the same as those in the foregoing embodiments and are not repeated herein.

Step 505, the reader sends signal $r,$ such that all the $N$ tags receive signal $r.$

Specifically, the reader sends signal $r$ $K$ times, that is, the reader sends signal $r$ to each group of tags in the $K$ groups of tags into which the $N$ tags are grouped. As described in the foregoing embodiments, multiple signals may be sent to each group of tags, and signal $r$ in this step may be any one of the multiple signals sent to each group of tags.

Taking the $k$-th signal transmission in $K$ signal transmissions by the reader as an example, namely, the $i$-th signal sent by the reader to the $k$-th group of tags can be represented as $r_i$, an antenna weighting coefficient at the $k$-th time is $w$, and thus a signal received by the $n$-th tag in the $k$-th group of tags is denoted as $r_i H_k w_k = r_i I_{k\_x \times 1}$. The meanings of the contents in the formula are the same as those in the foregoing embodiments and are not repeated here.

After $K$ transmissions by the reader, all the tags in the network will receive signal $r_i$, and the reader also knows $r_i$. Therefore, the information or feature in $r_i$ (i.e., related information of the signal, namely the related information of the $i$-th signal) can be quantized as a key source.

In the case where the coherent time is relatively long, that is, the channel environment is static, the reader does not need to repeatedly perform steps 501 to 504, and only needs to repeatedly perform step 505 multiple times. Each time, the reader may change signal $r$ (i.e., change the related information of the signal) and send signal $r$ again, that is, the reader may change $r$ in step 505 to make the key source time-varying and send the signal again. It may be understood that, when sending signals at different times, the reader may determine whether to change the related information of the signal according to actual needs. In some possible embodiments, there may exist cases where the reader sends the same signal at any two times, which is not exhaustively illustrated in the embodiment.

In the case where the channel environment is time-varying, steps 501 to 505 may be performed within different coherent times, and $r$ may be changed each time in step 505 so that the key source is time-varying.

Step 506, after multiple executions of step 505, the reader and all the tags have accumulated information or features of multiple different $r$, and then can determine their respective group keys. At this point, the reader obtains the first group key in the foregoing embodiments, and each tag obtains its respective second group key in the foregoing embodiments.

Step 507, the reader and the $N$ tags determine a consistent group key.

In this step, different final group key determination methods may be provided based on the computing capability of the tags.

Method 1: The reader maps an initial key sequence (i.e., the first group key of the reader) to a value through a hash function or calculates a CRC code of the sequence, and broadcasts the hash value or the CRC code. For each of the $N$ tags, upon receiving the hash value or the CRC code, the tag calculates a hash value or CRC code for the tag based on its own initial key sequence (i.e., the second group key of the tag itself), and compare the hash value or CRC code for the tag with data received from the reader, where if the hash value or CRC code for the tag is consistent with the data received from the reader, the tag returns a "success" instruction, and if the hash value or CRC code for the tag is not consistent with the data received from the reader, the tag returns a "fail" instruction and waits for the next group key generation. The reader records the tags that have successfully generated the group key and can communicate with these tags using this group key.

Method 2: In the case where the $N$ tags have certain error correcting decoding capabilities (such as LDPC or Turbo decoding), the reader can generate a check code from an initial key sequence (i.e., the first group key of the reader) through some encoding method, and sends the check code to the $N$ tags. All the tags use the check code to perform error correcting decoding (i.e., each tag performs error correcting decoding on the second group key of each tag), thereby enabling the reader and each tag to obtain a consistent key.

In the above two methods, Method 1 is for tags with relatively weak computing capability, which cannot perform error correcting. In the case where key inconsistency occurs, the tags need to wait for the next group key generation. Method 2 is a common key error correcting method, but the tags need to support decoding algorithms with certain complexity.

Further, in combination with the simulation experiment of the example provided in FIG. 5: a channel model between a reader and a tag is as follows: $G_{rt} = \sqrt{L_0 d_{rt}^{-\alpha_{rt}}} \left[ \sqrt{\frac{\beta_{rt}}{1+\beta_{rt}}} G_{rt}^{LOS} + \sqrt{\frac{1}{1+\beta_{rt}}} G_{rt}^{NLOS} \right]$, where

$L_0 = \left( \frac{\lambda_c}{4\pi} \right)^2$, denotes a path loss constant, and $\lambda_c$ denotes a carrier wavelength, where a carrier frequency is 900 MHz.

$G_{rt}^{NLOS}$ satisfies Rayleigh distribution, and $d_{rt}$ denotes a distance between a reader and a tag. $\alpha_{rt}$ denotes a path loss exponent, with a value of 2. $\beta_{rt}$ denotes a Rician factor, with a value of 3. $G_{rt}^{LOS} = (d^*)c$, where $d = [d_1 \cdots d_{N_{tag}}]^T$, $c = [c_1 \cdots c_M]$, $c_m = \exp\left( j2\pi \frac{d_r}{\lambda_c}(m-1)\sin\theta_r \right)$, $1 \le m \le M$, $d_{n_{tag}} = \exp\left( j2\pi \frac{d_t}{\lambda_c}(n_{tag}-1)\sin\theta_t \right)$, $1 \le n_{tag} \le N_{tag}$, where $d_r$ denotes a distance between antennas in a reader, $d_t$ denotes a distance between antennas in a tag,

$\frac{d_r}{\lambda_c} = 0.5$, $\frac{d_t}{\lambda_c} = 0$, and $N_{tag} = 1$. $M = 8$, $\theta_r = \tan^{-1}\frac{y_r - y_t}{x_r - x_t}$, $\theta_t = \pi - \theta_r$, and $(x_r, y_r)$ denotes a coordinate of a reader, set as the origin herein. $(x_t, y_t)$ denotes a coordinate of a tag, and $N$ tags are randomly and uniformly distributed, with $N = 32$. Communication range radius $d_1 = 50m$ and $d_2 = 5m$. Quantization order $Q = 8$, minimum power $P_{min}$ of signal $r$ satisfies $P_{min}$

= -20dBm, maximum power $P_{max}$ of signal r satisfies $P_{max}$ = 20dBm, and ref = 0.9.

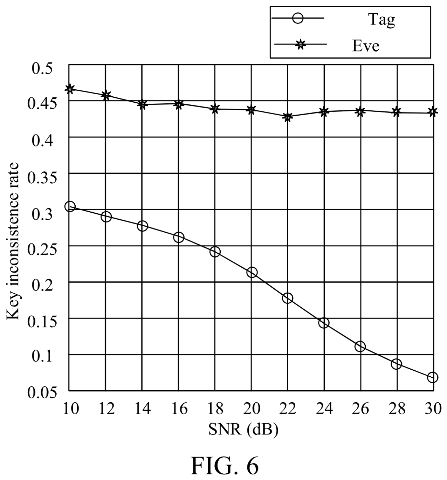

Based on the above model, key inconsistence rates between the N tags and the reader and between an eavesdropper and the reader are simulated. The results are as illustrated in FIG. 6. In FIG. 6, a key inconsistence rate between the tags and the reader represented by "tag" denotes an average key inconsistence rate between keys (the second group keys) of the N tags and a key (the first group key) of the reader. It can be seen from FIG. 6 that, with the increase of a signal-to-noise ratio (SNR), the key consistence rate between the tags and the reader decreases. For example, when the SNR is 10 dB, the key inconsistence rate between the tags and the reader is about 0.3, and when the SNR is 30 dB, the key inconsistence rate between the tags and the reader approaches 0.05. However, the key inconsistence rate between the eavesdropper and the reader remains stable around 0.45 - 0.5, indicating that in the above example, the reader and the tags can securely generate their respective group keys.

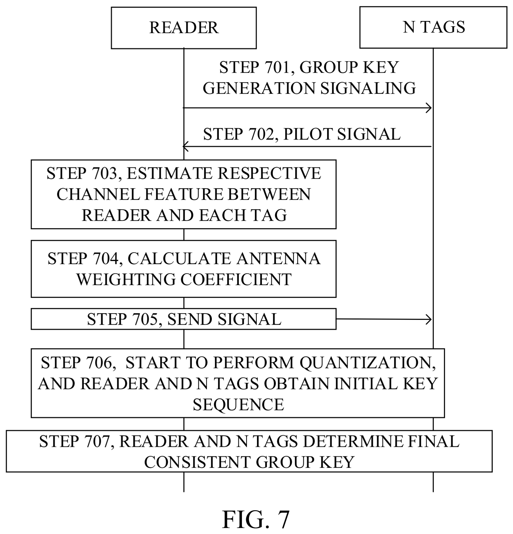

In combination with FIG. 7, another exemplary embodiment is described. In the scheme illustrated in FIG. 7, the strength of signal r is used as a key source, i.e., the related information of a signal in the foregoing embodiment specifically refers to a strength of the signal. In the embodiment, the strength of signal r is selected as the key source, that is, the specific content of signal r is not of concern, and only the strength of signal r is utilized. The specific steps are as follows.

The specific illustrations of steps 701 - 704 are the same as that of steps 501 - 504 in the foregoing embodiment and are therefore not repeated.

Step 705, the reader transmits signal r, such that the N tags receive signals with the same strength.

The specific process is as follows: the strength of signal r sent by the reader is denoted as P, where signal r is sent K times. Taking the k-th transmission as an example: an antenna weighting coefficient of the k-th transmission is $w_k$, the tags in the k-th group respectively receives signals with an amplitude $\sqrt{P}H_k w_k = \sqrt{P}I_{k\_n\times 1}$, where in the formula, P denotes a signal strength (or amplitude), and the other contents are the same as that in the foregoing embodiment and are not repeated. After K transmissions, all the tags will have recorded signal strength P, and the reader also knows P, so P will be used as the key source for quantization.

If the coherent time is relatively long, i.e., the channel environment is static, the reader does not need to repeatedly perform steps 701 to 704, and only needs to change the value of P in step 705 to make the key source time-varying. If the channel environment is time-varying, steps 701 to 705 can be executed in different coherent times.

Step 706, after accumulation through multiple executions of step 705, suppose each of all the tags has obtained L strength values, and the reader also knows these L strength values, then the tags and the reader start to perform quantization. The reader and the N tags obtain their respective initial key sequences, namely, the reader obtains the first group key, and each tag obtains its second group key. The specific process is as follows: assume the range of P at the reader is $P_{min} \leq P \leq P_{max}$. With quantization order Q, the range of P is evenly divided into Q intervals each corresponding to a Gray code of length $\log_2 Q$. In this case, each strength value corresponds to $\log_2 Q$ bits. To reduce differences in quantization results caused by minor errors around quantization boundaries, the reader and the tags may round all obtained strength values to the nearest integer and then perform quantization. In this way, the reader and the N tags obtain their respective initial key sequences. The quantization method includes but is not limited to the method described here.

Step 707, the reader and the N tags determine a consistent group key. Specifically, by means of Method 1 or Method 2, the reader and the N tags determine a final consistent key.

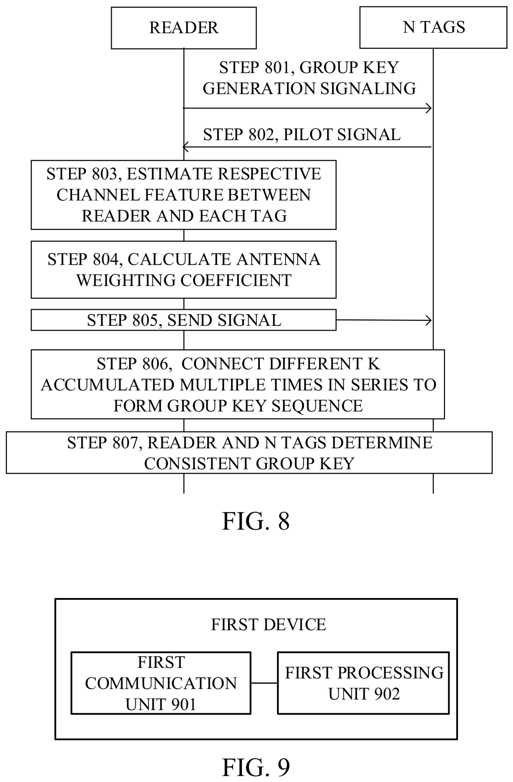

In combination with FIG. 8, another exemplary embodiment is described. In the scheme illustrated in FIG. 8, data information of signal r is used as a key source. In the embodiment, the data information carried in signal r is used as the key source, thereby resisting severe eavesdropping scenarios where an eavesdropper approaches a tag or a difference between legitimate and illegitimate channels is relatively small. The specific implementation includes the following steps.

Steps 801- 804 are the same as steps 501- 504 in the foregoing embodiment and are therefore not repeated.

Step 805, the reader sends signal r, such that the N tags receive the same group key.

The specific process is as follows: the reader sends signal r K times. At the k-th transmission of $r_{jk}$, a frame structure of $r_{jk}$ is designed as: $\left[ ID_1^k \oplus k_j, ID_2^k \oplus k_j, \cdots, ID_n^k \oplus k_j \right]$. When any tag in the k-th group receives $r_{jk}$, the tag extracts its corresponding data segment (i.e., the target data segment), then XORs the data segment with the ID of the tag to obtain $k_j$. In this way, after K transmissions, all tags will have obtained the same $k_j$. The meaning of contents of the formula in this step is the same as that in the foregoing embodiment and is therefore not repeated.

Within the same coherent time, it is only necessary to change k in step 805 to make the key source time-varying. Steps 801 to 805 can be executed in different coherent times.

Step 806, different k (i.e., key sequences) accumulated through multiple executions are concatenated as a group key sequence. At this point, the reader has obtained the first group key (i.e., the group key sequence obtained by the reader), and each tag has obtained its respective second group key (i.e., the group key sequence obtained by each tag).

Step 807, the reader and the N tags determine a consistent group key. That is, by means of Method 1 or Method 2, the reader and the N tags determine a final consistent key.

In the foregoing embodiments, a physical-layer (PHY) group key generation approach is designed for a zero-power communication network with a reader as a central node and multiple tags as child nodes. In this scheme, by configuring multiple antenna weighting coefficients for the reader, multiple tags can receive the same key source, thereby obtaining their respective group keys. In this way, the time overhead of group key generation is effectively reduced. Meanwhile, since the weighting coefficients are calculated based on legitimate channel values, for an eavesdropper, a legitimate channel and an eavesdropping channel differ, preventing the eavesdropper from obtaining the same key source as the tags, thereby ensuring the security of the group key. Furthermore, by designing the key source, it is possible to resist eavesdropping with different strengths, thus adapting to different application scenarios.

In the scheme provided by the embodiment, the first device sends multiple signals to each second device, and RF coefficients for the multiple signals are calculated based on a respective channel feature between each second device and the first device. The first device itself also generates, based on the related information of each signal, a group key for communication with each second device. In this way, by configuring respective RF coefficients corresponding to different second devices for signals sent to different second devices, it is possible to accurately cancel out the respective channel feature between each second device and the first device, i.e., canceling out a loss or interference in a channel between the second device and the first device. Thus, while reducing the time overhead of generating a group key, the security of the group key is also ensured.

Finally, the beneficial effects of the embodiments are further illustrated in combination with related technologies.

Research on group key generation technology can be classified into two categories: cryptographic group key generation, and PHY-based group key generation. For example, in cryptographic group key generation, taking that an AP and multiple STAs generate a group key as an example: the AP first performs a 4-way handshake with each STA to generate a corresponding pairwise key, where pairwise keys are different for different STAs. When a group key needs to be generated, the AP generates a group key, then encrypts the group key with a pairwise key and sends encrypted data to a corresponding STA, and the STA decrypts the group key using its pairwise key. That is, if there are $N$ STAs, the group key needs to be sent $N$ times. In PHY-based group key generation, the processing can include the following: in the first method, the central node and each child node exchange pilots with each other within the coherent time and respectively record signal strengths, then the central node calculates multiple strength differences and sends the multiple strength differences to the child nodes, respectively, and each child node uses its recorded signal strength and a received strength difference to recover a group key; in the second method, all the child nodes are required to be configured with multiple antennas, where for each child node, the child node records an antenna(s) that receives a signal as "1" and an antenna(s) that does not receive a signal as "0", thus obtaining a sequence representing multi-antenna received signal status; in the third method, by means of a specified approach, it can be ensured that the multiple child nodes obtains a same status sequence, so that the status sequence can serve as a group key.

However, the above group key generation approaches involved in the related art suffer from the following problems.

First, capability requirements for child nodes is high. Cryptographic group key generation requires devices to support a key generator and a complex encryption/decryption algorithm. PHY-based group key generation also require child nodes to have certain hardware or algorithmic capabilities. Most zero-power devices are designed with extremely simple circuits, low computational capability, and low storage capacity, and thus it impossible to support such approaches, so that such approaches that impose special requirements on child nodes are not generally applicable in zero-power networks.

Second, the time overhead of group key generation is significant. Suppose the time for a single one-way communication between nodes is $T$, and there are $N$ child nodes. Taking that an AP and multiple STAs generate a group key as an example, each child node requires a 4-way handshake to generate its pairwise key, and a final group key needs to be sent to each STA in sequence, so the time for generating a group key exceeds $2NT$. For PHY-based group key generation, in the first method, the time required to generate a group key is $2NT$, and within a coherent time during which the channel remains unchanged, only one group key can be generated. In scenarios with a relatively long coherent time, the group key does not change.

In contrast, by means of the key generation method provided by the embodiments of the present disclosure, the time overhead of group key generation can be firstly reduced. Specifically, in the key generation method provided by the present disclosure, the time for each of all tags (i.e., each second device) to obtain a quantization result or key sequence of a group key once (i.e., to obtain once related information of a signal, or obtain a quantization result or key sequence based on related information of a signal) is denoted as $\left(1 + N + ceil\left(\frac{N}{M}\right)\right)T$, which is less than $2NT$, i.e., lower than the time overhead of group key generation in the existing standard (802.11i). Furthermore, in the key generation method provided by the present disclosure, no any additional overhead needs to be introduced for the tags (i.e., second devices). For zero-power devices (tags), no extra processes are needed, and the tags only need to perform simple reflection and signal reception to realize group key generation, without requiring any changes to the technology supported by the zero-power devices or their simple circuit. Finally, even in environments with a relatively long coherent time, a group key can still be updated, avoiding the problem of using a single key for an excessively long period. Meanwhile, not only can an intrinsic channel be used to protect a key source, but signal $r$ can also be designed to enhance the protection of a key source, resisting eavesdroppers with varying degrees of capability.

FIG. 9 is a schematic structural diagram of a first device according to an embodiment of the present disclosure. The first device includes a first communication unit 901 configured to send multiple signals to each of multiple second devices, where RF coefficients for the multiple signals are calculated based on a respective channel feature between each of the multiple second devices and the first device; and a first processing unit 902 configured to generate a first group key based on related information of the multiple signals, where the first group key is used by the first device to communicate with the multiple second devices.

The first communication unit is configured to send group key generation signaling to each of the multiple second devices, and receive a pilot signal from each of the multiple second devices, where the pilot signal is a reflected signal corresponding to the group key generation signaling. The first processing unit is configured to calculate the respective channel feature between each of the multiple second devices and the first device based on the pilot signal from each of the multiple second devices.

The first processing unit is configured to calculate one or more RF coefficients based on the respective channel feature between each of the multiple second devices and the first device, where a different RF coefficient in the one or more RF coefficients correspond to a different second device.

The first communication unit is configured to send the multiple signals to each second device in a $k$-th group of second devices based on a $k$-th RF coefficient in the one or more RF coefficients, where different RF coefficients in the one or more RF coefficients correspond to different groups of the multiple second devices, respectively, different groups of the multiple second devices include different second devices, and the $k$-th group of second devices is one of one or more [groups of the multiple second devices, and $k$ is a positive integer.

The first processing unit is configured to obtain multiple first quantization results based on the related information of the multiple signals, and generate the first group key based on the multiple first quantization results.

The first processing unit is configured to determine, based on related information of an $i$-th signal in the multiple signals, a first quantization range corresponding to the $i$-th signal, and take a first quantization value corresponding to the first quantization range as an $i$-th first quantization result in the multiple first quantization results, where the first quantization range is one of multiple first candidate quantization ranges, each of the multiple first candidate quantization ranges has a corresponding first candidate quantization value, and $i$ is a positive integer.

The related information of the multiple signals includes at least one of: a strength of each signal in the multiple signals or a phase of each signal in the multiple signals.

The related information of the multiple signals includes a key sequence carried in each signal in the multiple signals. The first processing unit is configured to generate the first group key based on the key sequence carried in each signal in the multiple signals.

A $j$-th signal in the multiple signals carries one or more data segments, where a different data segment in the one or more data segments is calculated based on an ID of a different second device and a $j$-th key sequence, and $j$ is a positive integer.

The multiple signals are used by each of the multiple second devices to generate a second group key. The first processing unit is configured to calculate group key check information based on the first group key, where the group key check information is used by each of the multiple second devices to check a consistency between the second group key and the first group key. The first communication unit is configured to send a first message to each of the multiple second devices, where the first message carries the group key check information.

The first communication unit is configured to perform one of: receiving a second message from a target second device, where the second message indicates that the target second device has checked that the second group key is consistent with the first group key, and the target second device is one of the multiple second devices; and receiving a third message from the target second device, where the third message indicates that the target second device has checked that the second group key is not consistent with the first group key.

The multiple signals are used by each of the multiple second devices to generate a second group key. The first processing unit is configured to calculate group key error-correcting information based on the first group key, where the group key error-correcting information is used by each of the multiple second devices to correct the second group key to obtain a group key consistent with the first group key. The first communication unit is configured to send a fourth message to each of the multiple second devices, where the fourth message carries the group key error-correcting information.

The first device is one of: a terminal device and a network device, and the second device is a zero-power device.

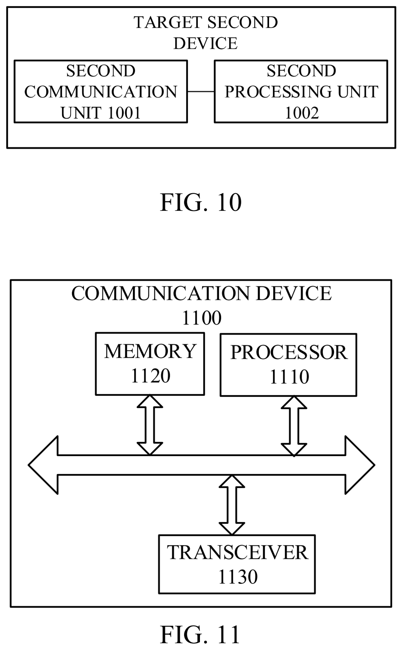

FIG. 10 is a schematic structural diagram of a target second device according to an embodiment of the present disclosure. The target second device includes a second communication unit 1001 configured to receive multiple signals from a first device, where RF coefficients for the multiple signals are calculated based on a channel feature between the target second device and the first device; and a second processing unit 1002 configured to generate a second group key based on related information of the multiple signals, where the second group key is used by the target second device to communicate with the first device, the second group key is identical for multiple second devices, and the target second device is one of the multiple second devices.

The second communication unit is configured to receive group key generation signaling from the first device, and send a pilot signal to the first device, where the pilot signal is a reflected signal corresponding to the group key generation signaling, and the pilot signal is used by the first device to calculate the channel feature between the target second device and the first device.

The second processing unit is configured to obtain multiple second quantization results based on the related information of the multiple signals, and generate the second group key based on the multiple second quantization results.

The second processing unit is configured to determine, based on related information of an i-th signal in the multiple signals, a second quantization range corresponding to the i-th signal, and take a second quantization value corresponding to the second quantization range as an i-th second quantization result in the multiple second quantization results, where the second quantization range is one of multiple second candidate quantization ranges, each of the multiple second candidate quantization ranges has a corresponding second candidate quantization value, and i is a positive integer.

The related information of the multiple signals includes at least one of: a strength of each signal in the multiple signals or a phase of each signal in the multiple signals.

The related information of the multiple signals includes a key sequence carried in each signal in the multiple signals. The second processing unit is configured to generate the second group key based on the key sequence carried in each signal in the multiple signals.

A j-th signal in the multiple signals carries one or more data segments, where a different data segment in the one or more data segments is calculated based on an ID of a different second device and a j-th key sequence. The second processing unit is configured to extract a target data segment corresponding to the target second device from the j-th signal, where j is a positive integer; and calculate a j-th key sequence carried in the j-th signal based on an ID of the target second device and the target data segment.

The second communication unit is configured to receive a first message from the first device, where the first message carries group key check information, the group key check information is calculated by the first device based on a first group key, and the first group key is generated by the first device based on the multiple signals. The second processing unit is configured to calculate check information based on the second group key, and check a consistency between the second group key and the first group key based on the group key check information and the check information.

The second communication unit is configured to perform one of: sending a second message to the first device in a case where the second group key is consistent with the first group key, where the second message indicates that the target second device has checked that the second group key is consistent with the first group key; and sending a third message to the first device in a case where the second group key is not consistent with the first group key, where the third message indicates that the target second device has checked that the second group key is not consistent with the first group key.

The second communication unit is configured to receive a fourth message from the first device, where the fourth message carries group key error-correcting information, the group key error-correcting information is calculated by the first device based on a first group key, and the first group key is generated by the first device based on the multiple signals. The second processing unit is configured to obtain a group key in consistence with the first group key by correcting the second group key based on the group key error-correcting information.

The first device is one of: a terminal device and a network device, and the target second device is a zero-power device.

The devices according to embodiments of the present disclosure can implement the corresponding functions of the respective devices in the key generation methods in the foregoing embodiments. For the procedures, functions, implementation manners, and beneficial effects of each module (sub-module, unit, or component, etc.) of the first device or the target second device, reference may be made to the corresponding illustrations in the foregoing method embodiments, which are not repeated herein. It may be noted that, the function of each module (sub-module, unit, or component, etc.) of the first device or the target second device in the embodiments of the present disclosure may be implemented by different modules (sub-modules, units, or components, etc.), or by the same module (sub-module, unit, or component, etc.).

FIG. 11 is a schematic structural diagram of a communication device 1100 according to embodiments of the present disclosure. The communication device includes a processor 1110. The processor 1110 may call and run a computer program from a memory so as to enable the communication device 1100 to implement the methods according to the embodiments of the present disclosure.

In a possible embodiment, the communication device 1100 may further include a memory 1120. The processor 1110 may call and run a computer program from the memory 1120 so as to enable the communication device 1100 to implement the methods according to the embodiments of the present disclosure. The memory 1120 may be a separate device independent of the processor 1110, or may be integrated into the processor 1110.

In a possible embodiment, the communication device 1100 may further include a transceiver 1130, and the processor 1110 may control the transceiver 1130 to communicate with other devices. Specifically, the processor 1110 may send information or data to other devices, or receive information or data sent by other devices. The transceiver 1130 may include a transmitter and a receiver. The transceiver 1130 may further include one or more antennas.

In a possible embodiment, the communication device 1100 may be the first device or the target second device according to the embodiments of the present disclosure, and the communication device 1100 may implement the corresponding procedures executed by the first device or the target second device in the respective methods of the embodiments of the present disclosure. For brevity, the details are not repeated herein.

The embodiments of the present disclosure provide a first device. The first device includes a processor and a memory in communication with the processor, where the memory is configured to store instructions which, when executed by the processor, cause the first device to: send multiple signals to each of multiple second devices, where RF coefficients for the multiple signals are calculated based on a respective channel feature between each of the multiple second devices and the first device; and generate a first group key based on related information of the multiple signals, where the first group key is used by the first device to communicate with the multiple second devices.

The instructions further cause the first device to send group key generation signaling to each of the multiple second devices; receive a pilot signal from each of the multiple second devices, where the pilot signal is a reflected signal corresponding to the group key generation signaling; and calculate the respective channel feature between each of the multiple second devices and the first device based on the pilot signal from each of the multiple second devices.

The instructions further cause the first device to calculate one or more RF coefficients based on the respective channel feature between each of the multiple second devices and the first device, where a different RF coefficient in the one or more RF coefficients corresponds to a different second device.

The instructions further cause the first device to send the multiple signals to each second device in a $k$-th group of second devices based on a $k$-th RF coefficient in the one or more RF coefficients, where different RF coefficients in the one or more RF coefficients correspond to different groups of the multiple second devices, respectively, different groups of the multiple second devices include different second devices, and the $k$-th group of second devices is one of one or more groups of the multiple second devices, and $k$ is a positive integer.

The instructions further cause the first device to obtain multiple first quantization results based on the related information of the multiple signals; and generate the first group key based on the multiple first quantization results.

The instructions further cause the first device to determine, based on related information of an $i$-th signal in the multiple signals, a first quantization range corresponding to the $i$-th signal, and take a first quantization value corresponding to the first quantization range as an $i$-th first quantization result in the multiple first quantization results, where the first quantization range is one of multiple first candidate quantization ranges, each of the multiple first candidate quantization ranges has a corresponding first candidate quantization value, and $i$ is a positive integer.

The related information of the multiple signals includes at least one of: a strength of each signal in the multiple signals or a phase of each signal in the multiple signals.

The related information of the multiple signals includes a key sequence carried in each signal in the multiple signals. The instructions further cause the first device to generate the first group key based on the key sequence carried in each signal in the multiple signals.

A $j$-th signal in the multiple signals carries one or more data segments, where a different data segment in the one or more data segments is calculated based on an ID of a different second device and a $j$-th key sequence, and $j$ is a positive integer.

The multiple signals are used by each of the multiple second devices to generate a second group key. The instructions further cause the first device to calculate group key check information based on the first group key, where the group key check information is used by each of the multiple second devices to check a consistency between the second group key and the first group key; and send a first message to each of the multiple second devices, where the first message carries the group key check information.

The instructions further cause the first device to perform one of: receiving a second message from a target second device, where the second message indicates that the target second device has checked that the second group key is consistent with the first group key, and the target second device is one of the multiple second devices; and receiving a third message from the target second device, where the third message indicates that the target second device has checked that the second group key is not consistent with the first group key.

The multiple signals are used by each of the multiple second devices to generate a second group key. The instructions further cause the first device to: calculate group key error-correcting information based on the first group key, where the group key error-correcting information is used by each of the multiple second devices to correct the second group key to obtain a group key consistent with the first group key; and send a fourth message to each of the multiple second devices, where the fourth message carries the group key error-correcting information.

The first device is one of: a terminal device and a network device, and the second device is a zero-power device.

The embodiments of the present disclosure provide a target second device. The target second device includes a processor, and a memory in communication with the processor. The memory is configured to store instructions which, when executed by the processor, cause the target second device to: receive multiple signals from a first device, where RF coefficients for the multiple signals are calculated based on a channel feature between the target second device and the first device; and generate a second group key based on related information of the multiple signals, where the second group key is used by the target second device to communicate with the first device, the second group key is identical for multiple second devices, and the target second device is one of the multiple second devices.

The instructions further cause the target second device to receive group key generation signaling from the first device, and send a pilot signal to the first device, where the pilot signal is a reflected signal corresponding to the group key generation signaling, and the pilot signal is used by the first device to calculate the channel feature between the target second device and the first device.

The instructions further cause the target second device to obtain multiple second quantization results based on the related information of the multiple signals, and generate the second group key based on the multiple second quantization results.

The instructions further cause the target second device to determine, based on related information of an $i$-th signal in the multiple signals, a second quantization range corresponding to the $i$-th signal, and take a second quantization value corresponding to the second quantization range as an $i$-th second quantization result in the multiple second quantization results, where the second quantization range is one of multiple second candidate quantization ranges, each of the multiple second candidate quantization ranges has a corresponding second candidate quantization value, and $i$ is a positive integer.

The related information of the multiple signals includes at least one of: a strength of each signal in the multiple signals or a phase of each signal in the multiple signals.

The related information of the multiple signals includes a key sequence carried in each signal in the multiple signals. The instructions further cause the target second device to generate the second group key based on the key sequence carried in each signal in the multiple signals.

A $j$-th signal in the multiple signals carries one or more data segments, where a different data segment in the one or more data segments is calculated based on an ID of a different second device and a $j$-th key sequence. The instructions further cause the target second device to extract a target data segment corresponding to the target second device from the $j$-th signal, where $j$ is a positive integer; and calculate a $j$-th key sequence carried in the $j$-th signal based on an ID of the target second device and the target data segment.

The instructions further cause the target second device to receive a first message from the first device, where the first message carries group key check information, the group key check information is calculated by the first device based on a first group key, and the first group key is generated by the first device based on the multiple signals; and calculate check information based on the second group key, and check a consistency between the second group key and the first group key based on the group key check information and the check information.

The instructions further cause the target second device to perform one of: sending a second message to the first device in a case where the second group key is consistent with the first group key, where the second message indicates that the target second device has checked that the second group key is consistent with the first group key; and sending a third message to the first device in a case where the second group key is not consistent with the first group key, where the third message indicates that the target second device has checked that the second group key is not consistent with the first group key.

The instructions further cause the target second device to receive a fourth message from the first device, where the fourth message carries group key error-correcting information, the group key error-correcting information is calculated by the first device based on a first group key, and the first group key is generated by the first device based on the multiple signals; and obtain a group key in consistence with the first group key by correcting the second group key based on the group key error-correcting information.

The first device is one of: a terminal device and a network device, and the target second device is a zero-power device.

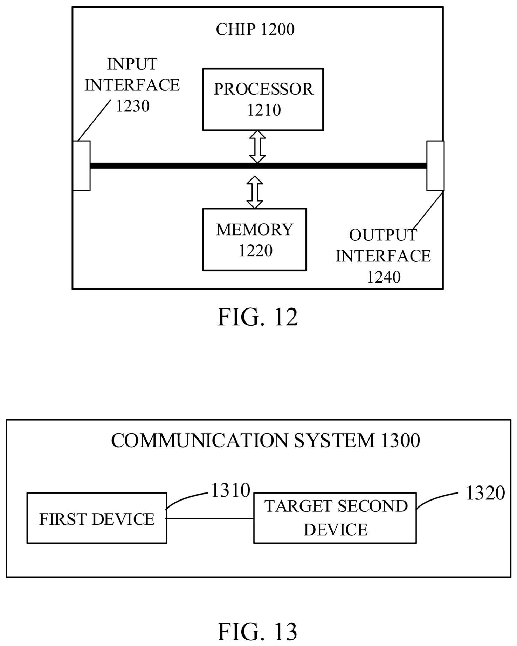

FIG. 12 is a schematic structural diagram of a chip 1200 according to embodiments of the present disclosure. The chip 1200 includes a processor 1210, which may call and run a computer program from a memory so as to implement the method according to the embodiments of the present disclosure.

In a possible embodiment, the chip 1200 may further include a memory 1220. The processor 1210 may call and run a computer program from the memory 1220 so as to implement the method executed by an access network device or a first core network device according to the embodiments of the present disclosure. The memory 1220 may be a separate device independent of the processor 1210, or may be integrated into the processor 1210.

In a possible embodiment, the chip 1200 may further include an input interface 1230. The processor 1210 may control the input interface 1230 to communicate with other devices or chips, and specifically, to acquire information or data sent by other devices or chips.

In a possible embodiment, the chip 1200 may further include an output interface 1240. The processor 1210 may control the output interface 1240 to communicate with other devices or chips, and specifically, to output information or data to other devices or chips.

In a possible embodiment, the chip 1200 may be applied to the first device or the target second device according to the embodiments of the present disclosure, and may implement the corresponding procedures executed by the first device or the target second device in the respective methods of the embodiments of the present disclosure. For brevity, the details are not repeated herein.

It may be understood that, the chip mentioned in the embodiments of the present disclosure may also be referred to as a system-on-chip (SoC), a system-level chip, a chip system, etc.

The processor mentioned above may be a general-purpose processor, a digital signal processor (DSP), a field programmable gate array (FPGA), an application-specific integrated circuit (ASIC), or other programmable logic device, transistor logic device, or discrete hardware component.

The memory mentioned above may be a volatile memory, a non-volatile memory, or a combination of both. The memory in the embodiments of the present disclosure is intended to include, but is not limited to, these and any other suitable types of memory.

FIG. 13 is a schematic block diagram of a communication system 1300 according to embodiments of the present disclosure. The communication system 1300 includes a first device 1310 and a target second device 1320. The above embodiments may be realized in whole or in part by software, hardware, firmware, or any combination thereof. When implemented in software, the implementation may be realized in whole or in part as a computer program product. The computer program product includes one or more computer instructions which, when loaded and executed on a computer, cause the processes or functions according to the embodiments of the present disclosure to be carried out in whole or in part. The computer may be a general-purpose computer, a dedicated computer, a computer network, or other programmable apparatus. The computer instructions may be stored in a computer-readable storage medium, or transmitted from one computer-readable storage medium to another.

It may be understood that, in various embodiments of the present disclosure, the magnitude of the sequences of the processes does not imply any execution order. The order of execution of the processes should be determined according to their functions and inherent logic, and should not be construed as limiting the embodiments of the present disclosure.

Those skilled in the art can clearly understand that, for convenience and brevity of illustration, for the specific working processes of the systems, devices, and units described above, reference may be made to the corresponding processes in the method embodiments, which are not repeated herein.

The foregoing illustration is merely illustrative embodiments of the present disclosure, and the scope of protection of the present disclosure is not limited thereto. Any variations or substitutions that can be readily conceived by those skilled in the art within the technical scope disclosed in the present disclosure shall fall within the scope of protection of the present disclosure. Therefore, the scope of protection of the present disclosure shall be subject to the scope of the appended claims.

**Claims**

1. A key generation method, comprising:

   sending, by a first device, a plurality of signals to each of a plurality of second devices, wherein radio frequency (RF) coefficients for the plurality of signals are calculated based on a respective channel feature between each of the plurality of second devices and the first device; and
   generating, by the first device, a first group key based on related information of the plurality of signals, wherein the first group key is used by the first device to communicate with the plurality of second devices.

2. The method according to claim 1, further comprising:

   sending, by the first device, group key generation signaling to each of the plurality of second devices;
   receiving, by the first device, a pilot signal from each of the plurality of second devices, wherein the pilot signal is a reflected signal corresponding to the group key generation signaling; and
   calculating, by the first device, the respective channel feature between each of the plurality of second devices and the first device based on the pilot signal from each of the plurality of second devices.

3. The method according to claim 2, further comprising:
   calculating, by the first device, one or more RF coefficients based on the respective channel feature between each of the plurality of second devices and the first device, wherein a different RF coefficient in the one or more RF coefficients corresponds to a different second device.

4. The method according to claim 3, wherein sending, by the first device, the plurality of signals to each of the plurality of second devices comprises:

sending, by the first device, the plurality of signals to each second device in a k-th group of second devices based on a k-th RF coefficient in the one or more RF coefficients, wherein different RF coefficients in the one or more RF coefficients correspond to different groups of the plurality of second devices, respectively, the different groups of the plurality of second devices comprise different second devices, and the k-th group of second devices is one of one or more groups of the plurality of second devices, and $k$ is a positive integer.

5. The method according to any one of claims 1 to 4, wherein generating, by the first device, the first group key based on the related information of the plurality of signals comprises:

obtaining, by the first device, a plurality of first quantization results based on the related information of the plurality of signals; and
generating, by the first device, the first group key based on the plurality of first quantization results.

6. The method according to claim 5, wherein obtaining, by the first device, the plurality of first quantization results based on the related information of the plurality of signals comprises:

determining, by the first device based on related information of an i-th signal in the plurality of signals, a first quantization range corresponding to the i-th signal, and taking, by the first device, a first quantization value corresponding to the first quantization range as an i-th first quantization result in the plurality of first quantization results, wherein the first quantization range is one of a plurality of first candidate quantization ranges, each of the plurality of first candidate quantization ranges has a corresponding first candidate quantization value, and i is a positive integer.

7. The method according to claim 5 or 6, wherein the related information of the plurality of signals comprises at least one of: a strength of each signal in the plurality of signals or a phase of each signal in the plurality of signals.

8. The method according to any one of claims 1 to 4, wherein the related information of the plurality of signals comprises a key sequence carried in each signal in the plurality of signals, and generating, by the first device, the first group key based on the related information of the plurality of signals comprises:

generating, by the first device, the first group key based on the key sequence carried in each signal in the plurality of signals.

9. The method according to claim 8, wherein a j-th signal in the plurality of signals carries one or more data segments, wherein a different data segment in the one or more data segments is calculated based on an identifier (ID) of a different second device and a j-th key sequence, and j is a positive integer.

10. The method according to any one of claims 1 to 9, wherein the plurality of signals are used by each of the plurality of second devices to generate a second group key, and the method further comprises:

calculating, by the first device, group key check information based on the first group key, wherein the group key check information is used by each of the plurality of second devices to check a consistency between the second group key and the first group key; and
sending, by the first device, a first message to each of the plurality of second devices, wherein the first message carries the group key check information.

11. The method according to claim 10, further comprising one of:

receiving, by the first device, a second message from a target second device, wherein the second message indicates that the target second device has checked that the second group key is consistent with the first group key, and the target second device is one of the plurality of second devices; and
receiving, by the first device, a third message from the target second device, wherein the third message indicates that the target second device has checked that the second group key is not consistent with the first group key.

12. The method according to any one of claims 1 to 9, wherein the plurality of signals are used by each of the plurality of second devices to generate a second group key, and the method further comprises:

calculating, by the first device, group key error-correcting information based on the first group key, wherein the group key error-correcting information is used by each of the plurality of second devices to correct the second group key to obtain a group key consistent with the first group key; and

sending, by the first device, a fourth message to each of the plurality of second devices, wherein the fourth message carries the group key error-correcting information.

13. The method according to any one of claims 1 to 12, wherein the first device is one of: a terminal device and a network device, and the second device is a zero-power device.

14. A key generation method, comprising:

receiving, by a target second device, a plurality of signals from a first device, wherein radio frequency (RF) coefficients for the plurality of signals are calculated based on a channel feature between the target second device and the first device; and

generating, by the target second device, a second group key based on related information of the plurality of signals, wherein the second group key is used by the target second device to communicate with the first device, the second group key is identical for a plurality of second devices, and the target second device is one of the plurality of second devices.

15. The method according to claim 14, further comprising:

receiving, by the target second device, group key generation signaling from the first device;

sending, by the target second device, a pilot signal to the first device, wherein the pilot signal is a reflected signal corresponding to the group key generation signaling, and the pilot signal is used by the first device to calculate the channel feature between the target second device and the first device.

16. The method according to claim 14 or claim 15, wherein generating, by the target second device, the second group key based on the related information of the plurality of signals comprises:

obtaining, by the target second device, a plurality of second quantization results based on the related information of the plurality of signals; and

generating, by the target second device, the second group key based on the plurality of second quantization results.

17. The method according to claim 16, wherein obtaining, by the first device, the plurality of second quantization results based on the related information of the plurality of signals comprises:

determining, by the target second device based on related information of an i-th signal in the plurality of signals, a second quantization range corresponding to the i-th signal, and taking, by the target second device, a second quantization value corresponding to the second quantization range as an i-th second quantization result in the plurality of second quantization results, wherein the second quantization range is one of a plurality of second candidate quantization ranges, each of the plurality of second candidate quantization ranges has a corresponding second candidate quantization value, and i is a positive integer.

18. The method according to claim 16 or 17, wherein the related information of the plurality of signals comprises at least one of: a strength of each signal in the plurality of signals or a phase of each signal in the plurality of signals.

19. The method according to claim 14 or claim 15, wherein the related information of the plurality of signals comprises a key sequence carried in each signal in the plurality of signals, and generating, by the target second device, the second group key based on the related information of the plurality of signals comprises:

generating, by the target second device, the second group key based on the key sequence carried in each signal in the plurality of signals.

20. The method according to claim 19, wherein a j-th signal in the plurality of signals carries one or more data segments, wherein a different data segment in the one or more data segments is calculated based on an ID of a different second device and a *j*-th key sequence; the method further comprises:

extracting, by the target second device, a target data segment corresponding to the target second device from the *j*-th signal, wherein *j* is a positive integer; and

calculating, by the target second device, a *j*-th key sequence carried in the *j*-th signal based on an ID of the target second device and the target data segment.

21. The method according to any one of claims 14 to 20, further comprising:

receiving, by the target second device, a first message from the first device, wherein the first message carries group key check information, the group key check information is calculated by the first device based on a first group key, and the first group key is generated by the first device based on the plurality of signals; calculating, by the target second device, check information based on the second group key; and checking, by the target second device, a consistency between the second group key and the first group key based on the group key check information and the check information.

22. The method according to claim 21, further comprising one of:

sending, by the target second device, a second message to the first device in a case where the second group key is consistent with the first group key, wherein the second message indicates that the target second device has checked that the second group key is consistent with the first group key; and sending, by the target second device, a third message to the first device in a case where the second group key is not consistent with the first group key, wherein the third message indicates that the target second device has checked that the second group key is not consistent with the first group key.

23. The method according to any one of claims 14 to 20, further comprising:

receiving, by the target second device, a fourth message from the first device, wherein the fourth message carries group key error-correcting information, wherein the group key error-correcting information is calculated by the first device based on a first group key, and the first group key is generated by the first device based on the plurality of signals; and obtaining, by the target second device, a group key in consistence with the first group key by correcting the second group key based on the group key error-correcting information.

24. The method according to any one of claims 14 to 23, wherein the first device is one of: a terminal device and a network device, and the target second device is a zero-power device.

25. A first device, comprising:

a first communication unit configured to send a plurality of signals to each of a plurality of second devices, wherein radio frequency (RF) coefficients for the plurality of signals are calculated based on a respective channel feature between each of the plurality of second devices and the first device; and a first processing unit configured to generate a first group key based on related information of the plurality of signals, wherein the first group key is used by the first device to communicate with the plurality of second devices.

26. The first device according to claim 25, wherein

the first communication unit is configured to send group key generation signaling to each of the plurality of second devices, and receive a pilot signal from each of the plurality of second devices, wherein the pilot signal is a reflected signal corresponding to the group key generation signaling; and the first processing unit is configured to calculate the respective channel feature between each of the plurality of second devices and the first device based on the pilot signal from each of the plurality of second devices.

27. The first device according to claim 26, wherein
the first processing unit is configured to calculate one or more RF coefficients based on the respective channel feature between each of the plurality of second devices and the first device, wherein a different RF coefficient in the one or more RF coefficients corresponds to a different second device.

28. The first device according to claim 27, wherein
the first communication unit is configured to send the plurality of signals to each second device in a $k$-th group of second devices based on a $k$-th RF coefficient in the one or more RF coefficients, wherein different RF coefficients in the one or more RF coefficients correspond to different groups of the plurality of second devices, respectively, the different groups of the plurality of second devices comprise different second devices, and the k-th group of second devices is one of one or more groups of the plurality of second devices, and $k$ is a positive integer.

29. The first device according to any one of claims 25 to 28, wherein
the first processing unit is configured to obtain a plurality of first quantization results based on the related information of the plurality of signals, and generate the first group key based on the plurality of first quantization results.

30. The first device according to claim 29, wherein
the first processing unit is configured to determine, based on related information of an i-th signal in the plurality of signals, a first quantization range corresponding to the i-th signal, and take a first quantization value corresponding to the first quantization range as an $i$-th first quantization result in the plurality of first quantization results, wherein the first quantization range is one of a plurality of first candidate quantization ranges, each of the plurality of first candidate quantization ranges has a corresponding first candidate quantization value, and i is a positive integer.

31. The first device according to claim 29 or 30, wherein the related information of the plurality of signals comprises at least one of: a strength of each signal in the plurality of signals or a phase of each signal in the plurality of signals.

32. The first device according to any one of claims 25 to 28, wherein

the related information of the plurality of signals comprises a key sequence carried in each signal in the plurality of signals; and
the first processing unit is configured to generate the first group key based on the key sequence carried in each signal in the plurality of signals.

33. The first device according to claim 32, wherein a j-th signal in the plurality of signals carries one or more data segments, wherein a different data segment in the one or more data segments is calculated based on an ID of a different second device and a $j$-th key sequence, and $j$ is a positive integer.

34. The first device according to any one of claims 25 to 33, wherein

the plurality of signals are used by each of the plurality of second devices to generate a second group key;
the first processing unit is configured to calculate group key check information based on the first group key, wherein the group key check information is used by each of the plurality of second devices to check a consistency between the second group key and the first group key; and
the first communication unit is configured to send a first message to each of the plurality of second devices, wherein the first message carries the group key check information.

35. The first device according to claim 34, wherein the first communication unit is configured to perform one of:

receiving a second message from a target second device, wherein the second message indicates that the target second device has checked that the second group key is consistent with the first group key, and the target second device is one of the plurality of second devices; and
receiving a third message from the target second device, wherein the third message indicates that the target second device has checked that the second group key is not consistent with the first group key.

36. The first device according to any one of claims 25 to 33, wherein

the plurality of signals are used by each of the plurality of second devices to generate a second group key;
the first processing unit is configured to calculate group key error-correcting information based on the first group key, wherein the group key error-correcting information is used by each of the plurality of second devices to correct the second group key to obtain a group key in consistence with the first group key; and
the first communication unit is configured to send a fourth message to each of the plurality of second devices, wherein the fourth message carries the group key error-correcting information.

37. The first device according to any one of claims 25 to 36, wherein the first device is one of: a terminal device and a network device, and the second device is a zero-power device.

38. A target second device, comprising:

a second communication unit configured to receive a plurality of signals from a first device, wherein radio frequency (RF) coefficients for the plurality of signals are calculated based on a channel feature between the target second device and the first device; and

a second processing unit configured to generate a second group key based on related information of the plurality of signals, wherein the second group key is used by the target second device to communicate with the first device, the second group key is identical for a plurality of second devices, and the target second device is one of the plurality of second devices.

39. The target second device according to claim 38, wherein

the second communication unit is configured to receive group key generation signaling from the first device, and send a pilot signal to the first device, wherein the pilot signal is a reflected signal corresponding to the group key generation signaling, and the pilot signal is used by the first device to calculate the channel feature between the target second device and the first device.

40. The target second device according to claim 38 or claim 39, wherein
the second processing unit is configured to obtain a plurality of second quantization results based on the related information of the plurality of signals, and generate the second group key based on the plurality of second quantization results.

41. The target second device according to claim 40, wherein
the second processing unit is configured to determine, based on related information of an $i$-th signal in the plurality of signals, a second quantization range corresponding to the $i$-th signal, and take a second quantization value corresponding to the second quantization range as an $i$-th second quantization result in the plurality of second quantization results, wherein the second quantization range is one of a plurality of second candidate quantization ranges, each of the plurality of second candidate quantization ranges has a corresponding second candidate quantization value, and $i$ is a positive integer.

42. The target second device according to claim 40 or 41, wherein the related information of the plurality of signals comprises at least one of: a strength of each signal in the plurality of signals or a phase of each signal in the plurality of signals.

43. The target second device according to claim 38 or claim 39, wherein

the related information of the plurality of signals comprises a key sequence carried in each signal in the plurality of signals; and
the second processing unit is configured to generate the second group key based on the key sequence carried in each signal in the plurality of signals.

44. The target second device according to claim 43, wherein

a $j$-th signal in the plurality of signals carries one or more data segments, wherein a different data segment in the one or more data segments is calculated based on an identifier (ID) of a different second device and a $j$-th key sequence; and
the second processing unit is configured to extract a target data segment corresponding to the target second device from the $j$-th signal, wherein $j$ is a positive integer; and calculate a $j$-th key sequence carried in the $j$-th signal based on an ID of the target second device and the target data segment.

45. The target second device according to any one of claims 38 to 44, wherein

the second communication unit is configured to receive a first message from the first device, wherein the first message carries group key check information, the group key check information is calculated by the first device based on a first group key, and the first group key is generated by the first device based on the plurality of signals; and
the second processing unit is configured to calculate check information based on the second group key, and check a consistency between the second group key and the first group key based on the group key check information and the check information.

46. The target second device according to claim 45, wherein the second communication unit is configured to perform one of:

sending a second message to the first device in a case where the second group key is consistent with the first group key, wherein the second message indicates that the target second device has checked that the second group key is consistent with the first group key; and

sending a third message to the first device in a case where the second group key is not consistent with the first group key, wherein the third message indicates that the target second device has checked that the second group key is not consistent with the first group key.

47. The target second device according to any one of claims 38 to 44, wherein

the second communication unit is configured to receive a fourth message from the first device, wherein the fourth message carries group key error-correcting information, wherein the group key error-correcting information is calculated by the first device based on a first group key, and the first group key is generated by the first device based on the plurality of signals; and

the second processing unit is configured to obtain a group key in consistence with the first group key by correcting the second group key based on the group key error-correcting information.

48. The target second device according to any one of claims 38 to 47, wherein the first device is one of: a terminal device and a network device, and the target second device is a zero-power device.

49. A first device, comprising:

a processor; and

a memory in communication with the processor, wherein the memory is configured to store instructions which, when executed by the processor, cause the first device to:

send a plurality of signals to each of a plurality of second devices, wherein radio frequency (RF) coefficients for the plurality of signals are calculated based on a respective channel feature between each of the plurality of second devices and the first device; and

generate a first group key based on related information of the plurality of signals, wherein the first group key is used by the first device to communicate with the plurality of second devices.

50. The first device according to claim 49, wherein the instructions further cause the first device to: send group key generation signaling to each of the plurality of second devices; receive a pilot signal from each of the plurality of second devices, wherein the pilot signal is a reflected signal corresponding to the group key generation signaling; and calculate the respective channel feature between each of the plurality of second devices and the first device based on the pilot signal from each of the plurality of second devices.

51. The first device according to claim 50, wherein the instructions further cause the first device to: calculate one or more RF coefficients based on the respective channel feature between each of the plurality of second devices and the first device, wherein a different RF coefficients in the one or more RF coefficients corresponds to a different second device.

52. The first device according to claim 51, wherein the instructions further cause the first device to: send the plurality of signals to each second device in a $k$-th group of second devices based on a $k$-th RF coefficient in the one or more RF coefficients, wherein different RF coefficients in the one or more RF coefficients correspond to different groups of the plurality of second devices, respectively, the different groups of the plurality of second devices comprise different second devices, and the $k$-th group of second devices is one of one or more groups of the plurality of second devices, and $k$ is a positive integer.

53. The first device according to any one of claims 49 to 52, wherein the instructions further cause the first device to: obtain a plurality of first quantization results based on the related information of the plurality of signals; and generate the first group key based on the plurality of first quantization results.

54. The first device according to claim 53, wherein the instructions further cause the first device to: determine, based on related information of an $i$-th signal in the plurality of signals, a first quantization range corresponding to the $i$-th signal, and take a first quantization value corresponding to the first quantization range as an $i$-th first quantization result in the plurality of first quantization results, wherein the first quantization range is one of a plurality of first candidate quantization ranges, each of the plurality of first candidate quantization ranges has a corresponding first candidate quantization value, and $i$ is a positive integer.

55. The first device according to claim 53 or 54, wherein the related information of the plurality of signals comprises at least one of: a strength of each signal in the plurality of signals or a phase of each signal in the plurality of signals.

56. The first device according to any one of claims 49 to 52, wherein

   the related information of the plurality of signals comprises a key sequence carried in each signal in the plurality of signals; and
   the instructions further cause the first device to generate the first group key based on the key sequence carried in each signal in the plurality of signals.

57. The first device according to claim 56, wherein a $j$-th signal in the plurality of signals carries one or more data segments, wherein a different data segment in the one or more data segments is calculated based on an identifier (ID) of a different second device and a $j$-th key sequence, and $j$ is a positive integer.

58. The first device according to any one of claims 49 to 57, wherein

   the plurality of signals are used by each of the plurality of second devices to generate a second group key; and
   the instructions further cause the first device to:

      calculate group key check information based on the first group key, wherein the group key check information is used by each of the plurality of second devices to check a consistency between the second group key and the first group key; and
      send a first message to each of the plurality of second devices, wherein the first message carries the group key check information.

59. The first device according to claim 58, wherein the instructions further cause the first device to perform one of:

      receiving a second message from a target second device, wherein the second message indicates that the target second device has checked that the second group key is consistent with the first group key, and the target second device is one of the plurality of second devices; and
      receiving a third message from the target second device, wherein the third message indicates that the target second device has checked that the second group key is not consistent with the first group key.

60. The first device according to any one of claims 49 to 57, wherein

   the plurality of signals are used by each of the plurality of second devices to generate a second group key; and
   the instructions further cause the first device to:

      calculate group key error-correcting information based on the first group key, wherein the group key error-correcting information is used by each of the plurality of second devices to correct the second group key to obtain a group key in consistence with the first group key; and
      send a fourth message to each of the plurality of second devices, wherein the fourth message carries the group key error-correcting information.

61. The first device according to any one of claims 49 to 60, wherein the first device is one of: a terminal device and a network device, and the second device is a zero-power device.

62. A target second device, comprising:

   a processor; and
   a memory in communication with the processor, wherein the memory is configured to store instructions which, when executed by the processor, cause the target second device to:

      receive a plurality of signals from a first device, wherein radio frequency (RF) coefficients for the plurality of signals are calculated based on a channel feature between the target second device and the first device; and generate a second group key based on related information of the plurality of signals, wherein the second group key is used by the target second device to communicate with the first device, the second group key is identical for a plurality of second devices, and the target second device is one of the plurality of second devices.

63. The target second device according to claim 62, wherein the instructions further cause the target second device to: receive group key generation signaling from the first device, and send a pilot signal to the first device, wherein the pilot signal is a reflected signal corresponding to the group key generation signaling, and the pilot signal is used by the first device to calculate the channel feature between the target second device and the first device.

64. The target second device according to claim 62 or claim 63, wherein the instructions further cause the target second device to: obtain a plurality of second quantization results based on the related information of the plurality of signals, and generate the second group key based on the plurality of second quantization results.

65. The target second device according to claim 64, wherein the instructions further cause the target second device to: determine, based on related information of an i-th signal in the plurality of signals, a second quantization range corresponding to the i-th signal, and take a second quantization value corresponding to the second quantization range as an i-th second quantization result in the plurality of second quantization results, wherein the second quantization range is one of a plurality of second candidate quantization ranges, each of the plurality of second candidate quantization ranges has a corresponding second candidate quantization value, and $i$ is a positive integer.

66. The target second device according to claim 64 or 65, wherein the related information of the plurality of signals comprises at least one of: a strength of each signal in the plurality of signals or a phase of each signal in the plurality of signals.

67. The target second device according to claim 62 or claim 63, wherein

the related information of the plurality of signals comprises a key sequence carried in each signal in the plurality of signals; and the instructions further cause the target second device to generate the second group key based on the key sequence carried in each signal in the plurality of signals.

68. The target second device according to claim 67, wherein

a $j$-th signal in the plurality of signals carries one or more data segments, wherein a different data segment in the one or more data segments is calculated based on an identifier (ID) of a different second device and a $j$-th key sequence; and the instructions further cause the target second device to extract a target data segment corresponding to the target second device from the $j$-th signal, wherein $j$ is a positive integer; and calculate a j-th key sequence carried in the $j$-th signal based on an ID of the target second device and the target data segment.

69. The target second device according to any one of claims 62 to 68, wherein the instructions further cause the target second device to:

receive a first message from the first device, wherein the first message carries group key check information, the group key check information is calculated by the first device based on a first group key, and the first group key is generated by the first device based on the plurality of signals; and calculate check information based on the second group key, and check a consistency between the second group key and the first group key based on the group key check information and the check information.

70. The target second device according to claim 69, wherein the instructions further cause the target second device to perform one of:

sending a second message to the first device in a case where the second group key is consistent with the first group key, wherein the second message indicates that the target second device has checked that the second group key is consistent with the first group key; and

sending a third message to the first device in a case where the second group key is not consistent with the first group key, wherein the third message indicates that the target second device has checked that the second group key is not consistent with the first group key.

71. The target second device according to any one of claims 62 to 68, wherein the instructions further cause the target second device to:

receive a fourth message from the first device, wherein the fourth message carries group key error-correcting information, wherein the group key error-correcting information is calculated by the first device based on a first group key, and the first group key is generated by the first device based on the plurality of signals; and obtain a group key in consistence with the first group key by correcting the second group key based on the group key error-correcting information.

72. The target second device according to any one of claims 62 to 71, wherein the first device is one of: a terminal device and a network device, and the target second device is a zero-power device.

73. A chip, comprising a processor configured to call and run a computer program from a memory, such that a device equipped with the chip executes the method according to any one of claims 1 to 13 or any one of claims 14 to 24.

74. A computer-readable storage medium configured to store a computer program, wherein when the computer program is executed by a device, the device executes the method according to any one of claims 1 to 13 or any one of claims 14 to 24.

75. A computer program product, comprising computer program instructions, the computer program instructions being configured to cause a computer to execute the method according to any one of claims 1 to 13 or any one of claims 14 to 24.

76. A computer program, configured to cause a computer to execute the method according to any one of claims 1 to 13 or any one of claims 14 to 24.

100

110

120                                    120

FIG. 1

| FIRST DEVICE SENDS MULTIPLE SIGNALS TO EACH OF MULTIPLE SECOND DEVICES, WHERE RADIO FREQUENCY (RF) COEFFICIENTS FOR MULTIPLE SIGNALS ARE CALCULATED BASED ON RESPECTIVE CHANNEL FEATURE BETWEEN EACH SECOND DEVICE AND FIRST DEVICE | S210 |
|---|---|
| FIRST DEVICE GENERATES FIRST GROUP KEY BASED ON RELATED INFORMATION OF MULTIPLE SIGNALS, WHERE FIRST GROUP KEY IS USED BY FIRST DEVICE TO COMMUNICATE WITH MULTIPLE SECOND DEVICES | S220 |

FIG. 2

| TARGET SECOND DEVICE RECEIVES MULTIPLE SIGNALS FROM FIRST DEVICE, WHERE RF COEFFICIENTS FOR MULTIPLE SIGNALS ARE CALCULATED BASED ON CHANNEL FEATURE BETWEEN TARGET SECOND DEVICE AND FIRST DEVICE | S310 |
|---|---|
| TARGET SECOND DEVICE GENERATES SECOND GROUP KEY BASED ON RELATED INFORMATION OF MULTIPLE SIGNALS, WHERE SECOND GROUP KEY IS USED BY TARGET SECOND DEVICE TO COMMUNICATE WITH FIRST DEVICE, SECOND GROUP KEY IS IDENTICAL FOR MULTIPLE SECOND DEVICES, AND TARGET SECOND DEVICE IS ONE OF MULTIPLE SECOND DEVICES | S320 |

FIG. 3

FIG. 4

| READER | | N TAGS |
|---|---|---|

STEP 501, GROUP KEY
GENERATION SIGNALING

STEP 502, PILOT SIGNAL

STEP 503, ESTIMATE RESPECTIVE
CHANNEL FEATURE BETWEEN
READER AND EACH TAG

STEP 504, CALCULATE ANTENNA
WEIGHTING COEFFICIENT

505, SEND SIGNAL

506, DETERMINE RESPECTIVE GROUP KEY

507, DETERMINE CONSISTENT GROUP KEY

## FIG. 5

FIG. 6

```
┌─────────────────┐              ┌─────────────────┐
│     READER      │              │     N TAGS      │
└─────────────────┘              └─────────────────┘
        │                                 │
        │   STEP 701, GROUP KEY           │
        │   GENERATION SIGNALING          │
        │ ──────────────────────────────→ │
        │                                 │
        │   STEP 702, PILOT SIGNAL        │
        │ ←────────────────────────────── │
        │                                 │
 ┌──────────────────────────────┐         │
 │ STEP 703, ESTIMATE RESPECTIVE│         │
 │ CHANNEL FEATURE BETWEEN      │         │
 │ READER AND EACH TAG          │         │
 └──────────────────────────────┘         │
 ┌──────────────────────────────┐         │
 │ STEP 704, CALCULATE ANTENNA  │         │
 │ WEIGHTING COEFFICIENT        │         │
 └──────────────────────────────┘         │
 ┌─────────────────────────────────┐      │
 │   STEP 705, SEND SIGNAL         │────→ │
 └─────────────────────────────────┘      │
 ┌──────────────────────────────────────────┐
 │ STEP 706,  START TO PERFORM QUANTIZATION, │
 │ AND READER AND N TAGS OBTAIN INITIAL KEY  │
 │ SEQUENCE                                  │
 └──────────────────────────────────────────┘
┌────────────────────────────────────────────┐
│ STEP 707, READER AND N TAGS DETERMINE FINAL │
│ CONSISTENT GROUP KEY                        │
└────────────────────────────────────────────┘
        │                                 │
```

FIG. 7

| READER | | | N TAGS |
|---|---|---|---|

STEP 801, GROUP KEY
GENERATION SIGNALING

STEP 802, PILOT SIGNAL

STEP 803, ESTIMATE RESPECTIVE
CHANNEL FEATURE BETWEEN
READER AND EACH TAG

STEP 804, CALCULATE ANTENNA
WEIGHTING COEFFICIENT

STEP 805, SEND SIGNAL

STEP 806, CONNECT DIFFERENT K
ACCUMULATED MULTIPLE TIMES IN SERIES TO
FORM GROUP KEY SEQUENCE

STEP 807, READER AND N TAGS DETERMINE
CONSISTENT GROUP KEY

## FIG. 8

FIRST DEVICE

| FIRST COMMUNICATION UNIT 901 | FIRST PROCESSING UNIT 902 |
|---|---|

## FIG. 9

TARGET SECOND DEVICE

SECOND COMMUNICATION UNIT 1001 — SECOND PROCESSING UNIT 1002

FIG. 10

COMMUNICATION DEVICE 1100

MEMORY 1120

PROCESSOR 1110

TRANSCEIVER 1130

FIG. 11

CHIP 1200

INPUT INTERFACE 1230

PROCESSOR 1210

MEMORY 1220

OUTPUT INTERFACE 1240

## FIG. 12

COMMUNICATION SYSTEM 1300

FIRST DEVICE 1310

TARGET SECOND DEVICE 1320

## FIG. 13

## INTERNATIONAL SEARCH REPORT

| | International application No. |
|---|---|
| | **PCT/CN2023/096686** |

**A. CLASSIFICATION OF SUBJECT MATTER**

H04L 9/08(2006.01)i

According to International Patent Classification (IPC) or to both national classification and IPC

**B. FIELDS SEARCHED**

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNTXT, CNKI, ENTXT, ENTXTC, VEN, IEEE, 3GPP: 阅读器, 读写器, 读取器, 标签, 组密钥, 共享密钥, 信道特征, 信道分析, 信道估计, 损耗, 衰减, 噪声, 射频, 天线, 天线权, 发射, 传送, 传输, 增益, 权重, 系数, 因数, 因子, 强度, 相位, 量化, reader, tag?, group key, shared key, channel characteristics, channel analysis, channel estimation, loss, attenuation, noise, radio frequency, RF, antenna, antenna weight, transmission, gain, weight, coefficient, factor, strength, phase, quantiz+

**C. DOCUMENTS CONSIDERED TO BE RELEVANT**

| Category* | Citation of document, with indication, where appropriate, of the relevant passages | Relevant to claim No. |
|---|---|---|
| A | CN 106603228 A (GUANGDONG UNIVERSITY OF TECHNOLOGY) 26 April 2017 (2017-04-26) description, paragraphs 0002-0067 | 1-76 |
| A | CN 103067042 A (INFORMATION ENGINEERING UNIVERSITY OF PLA) 24 April 2013 (2013-04-24) entire document | 1-76 |
| A | CN 105721142 A (GUANGDONG UNIVERSITY OF TECHNOLOGY) 29 June 2016 (2016-06-29) entire document | 1-76 |
| A | CN 116095677 A (CHINA MOBILE COMMUNICATION LTD., RESEARCH INSTITUTE et al.) 09 May 2023 (2023-05-09) entire document | 1-76 |

☑ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **17 December 2023** | **21 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/096686** |

### C.    DOCUMENTS CONSIDERED TO BE RELEVANT

| Category* | Citation of document, with indication, where appropriate, of the relevant passages | Relevant to claim No. |
| --- | --- | --- |
| A | US 2014307871 A1 (ELECTRONICS AND TELECOMMUNICATIONS RESEARCH INSTITUTE) 16 October 2014 (2014-10-16)<br>entire document | 1-76 |

Form PCT/ISA/210 (second sheet) (July 2022)

**INTERNATIONAL SEARCH REPORT**
Information on patent family members

International application No.

**PCT/CN2023/096686**

| Patent document cited in search report | | | Publication date (day/month/year) | Patent family member(s) | | | Publication date (day/month/year) |
|---|---|---|---|---|---|---|---|
| CN | 106603228 | A | 26 April 2017 | None | | | |
| CN | 103067042 | A | 24 April 2013 | None | | | |
| CN | 105721142 | A | 29 June 2016 | None | | | |
| CN | 116095677 | A | 09 May 2023 | WO | 2023078400 | A1 | 11 May 2023 |
| US | 2014307871 | A1 | 16 October 2014 | KR | 20140123723 | A | 23 October 2014 |

Form PCT/ISA/210 (patent family annex) (July 2022)